# EUROPEAN PATENT SPECIFICATION

(11) **EP 1 807 985 B1**
(45) Date of publication and mention of the grant of the patent: **18.02.2009**
(21) Application number: 05807691.0
(22) Date of filing: 01.11.2005
(51) Int. Cl.: H04L 12/58

(54) **A method, computer program and system for regulating electronic mail**
Verfahren, Computerprogramm und System zur regulieren von E-mail
Procédé, programme pour ordinateur et système de regulation de courrier éléctronique

(30) Priority: 02.11.2004 GB 0424243
(43) Date of publication of application: 18.07.2007
(73) Proprietor: Rand, Ricky Charles, Hong Kong (CN); RAND, Clive, Hong Kong (CN); CLARK, Paul, Truro, Cornwall TR4 8BL (GB)
(72) Inventor: Rand, Ricky Charles, Hong Kong (CN); RAND, Clive, Hong Kong (CN); CLARK, Paul, Truro, Cornwall TR4 8BL (GB)
(74) Representative: Richardson, Mark Jonathan
(86) International application number: PCT/GB2005/004205
(87) International publication number: WO 2006/048621

(56) References cited:
- US-A- 5 999 967
- US-A1- 2003 023 736

## Description

### BACKGROUND OF THE INVENTION

### 1. Field of the Invention

This invention relates to the efficient delivery of electronic mail (e-mail), between two legitimately corresponding parties, while preventing intrusion from unsolicited bulk e-mail or 'spam'. In particular, it relates to a process of reusable permits or 'stamps' which can be attached to legitimate e-mail but which a bulk sender ('spammer') would find uneconomic to purchase. The invention also relates to a process of centralised management of response to unstamped e-mail.

As e-mail, for example of the kind using RFC2821 and RFC2822 protocols has become a major communications technology, so has the problem of 'junk mail' or 'spam' e-mail. Users of e-mail are faced with very large quantities of advertising e-mail from parties unknown to them, sent indiscriminately. Existing 'spam filtering' services estimate that globally between 50% and 70% of all e-mail sent is spam, and individuals who have a significant 'Internet presence' and hence are easily targeted may find that up to 99% of their e-mail received is spam.

Alongside the waste of network and computer resources in transmitting and storing such a huge volume of unwanted e-mail, the cost of dealing with spam is felt most strongly by recipients, who have to sort through large quantities of unwanted, irrelevant e-mails to find the few that do concern them. As well as the time and effort required to do this, there is a significant risk of missing a relevant e-mail in amongst the 'noise'. E-mail as a whole thereby becomes a less reliable and useful form of communication.

The perfect solution to spam would prevent the delivery of e-mail from bulk senders with no connection to the recipient, while still allowing delivery of e-mail from legitimate senders, including persons as yet unknown to the recipient and even low-volume, highly targeted marketing and advertising e-mail from relevant parties.

### 2. Related Background Art

A number of solutions to the 'spam problem' have been proposed, and many are in current operation. Following industry convention, in the following description a 'false positive' is a legitimate e-mail which was wrongly blocked, and a 'false negative' is a spam e-mail which was wrongly delivered. The aim of spam prevention is of course to reduce both types of error to zero.

The practice of sending spam is considered sufficiently harmful that various jurisdictions have brought in legislation banning or restricting it, including:
- The CAN-SPAM Act in the USA
- The EU Directive on Privacy and Electronic Communications (esp Art. 13)

While these legal measures have undoubtedly made life harder for some spammers, the global nature of the Internet has made it impossible to keep up with the more sophisticated offenders who have simply moved their operations offshore to other jurisdictions, or hide behind a cascade of forged identities. The focus has therefore moved to more technical measures.

The most obvious solution to the problem of spam is to prevent the spam being sent in the first place. Suppressing spam at source has the most direct effect on the network bandwidth wastage, instead of waiting for indirect economic effects curtailing the spammer's business.

The e-mail system has traditionally been very open, allowing spammers to use almost any mailserver to send out their e-mail while remaining anonymous. One of the first anti-spam efforts was therefore to close down or block 'open mail relays', as disclosed in US Patent No. US6321267.

As open relays became less useful, spammers then started to use Internet Service Provider's (ISPs) servers, hiding behind transient user accounts, and using the relatively anonymous mail protocols to send their e-mail without being identified. An attempted solution to this has been the increasing use of authenticated SMTP to force senders to authenticate to their ISP's mailserver. In combination with more stringent verification of user identity on signup, this can at least be used to trace an offending spam episode back to the originator, at which point the legal sanctions described above may be applied.

Another alternative for spammers is to operate their own mailservers connected directly to the internet, which connect directly to destination mailservers for delivery of e-mail. This avoids any attempt to control the spam at source, but some receiving mailservers implement a check against a 'Black-list' which indicates whether a sending mailserver is suspected of being a conduit for spam. This process unfortunately tends to cause a large number of false positives.

Rather than simply blocking e-mail from suspected spammers, another solution is to deliberately create friction in the mail-sending process by building 'broken' e-mail receiving servers which slow down the sending mailservers by responding very slowly - an idea known as a 'Tarpit'. This works particularly well if the Tarpit servers handle e-mail for some completely fictional addresses used only to entrap spammers. However, such techniques can fairly easily be worked around by a spammer who doesn't really care if any individual e-mail is delivered, and can simply cancel any delivery that takes too long.

An alternate way of measuring the 'badness' of an individual e-mail sender is to measure the volume of e-mail they send - this being the major problem with spam in the first place. In theory, this could be done at the network edge where they connect, but does not seem to be in practice, possibly because of limitations of router processing power and storage capacity. However some large organisations are instituting their own control on this basis, using products such as TurnTide Anti-Spam Router. This measures the volume of e-mail coming from a particular network address, and limits it to a small number per hour. This stops major spam attacks from a single network address, but does not prevent more distributed 'stealth' tactics.

A better, longer-term approach is to require stronger authentication of the e-mail exchange process itself, to at least prevent the forgery of return addresses which almost universally goes hand-in-hand with spam, and which prevents the satisfactory operation of other techniques such as 'White-listing' (discussed below). A number of proposals have been made under the general heading 'Lightweight MTA Authentication Protocol', plus some specific ones such as Yahoo's DomainKeys. Stronger versions of these proposals, which require cryptographic software at each end and strict proof of identity, have existed for some time.

The problem with all these proposals is that at most they can verify that the sender has the right to use the domain or identity they claim to be from. Since domains are easily obtained and largely unregulated, this has little effect on their ability to send spam. Systems requiring strict proof of identity remove much of the ease of informal communication made possible by e-mail.

Overall, the search for an at-source solution has foundered on the fact that the Internet is by design an open and dynamic mesh structure, and in the limit is very difficult to prevent spammers finding a legitimate or illegitimate way into it.

By far the most common attempt to control spam in common current use is filtering based on the content of individual messages. This is currently relatively successful because spam messages have traditionally been 'of a type', containing brief and badly-worded advertisements for a small group of products ('performance-enhancing' drugs, loans, make-money-fast schemes and the like). It also carries the advantage of allowing implementation of the filtering at any stage of the process, including at the receiving e-mail client.

Early filtering systems such as that disclosed in US Patent No. US5377354 and the 'Rules Wizard' built into well-known e-mail client software provided basic filtering for general organisation of incoming e-mail, which could be used for spam if carefully maintained. More sophisticated rule-based systems using scoring are built into a large number of spam filter products at different layers of the network: US Patent No. US6650890 discloses one such product which is built in at the network level.

More modern content-filtering systems, such as that disclosed in US Patent No. US6161130, use statistical techniques to measure the 'probability' of a given incoming e-mail being spam based on the presence of words compared to corpora of spam and non-spam e-mail. The most famous of these is Paul Graham's "Plan for Spam", which uses Bayes' theorem of conditional probability. UK Patent No. GB2396993 discloses the further use of 'artificial intelligence' techniques.

A more sophisticated technique than merely looking at each message individually is to provide collaboration between e-mail filters to attempt to measure the volume of identical messages being issued. This collaborative knowledge is then used to inform a more general filtering system. One such technique is disclosed in US Patent Nos. US6023723 and US6330590. Another technique disclosed in US Patent No. US6453327 is to ensure than once spam has been manually reported by one user it is automatically dealt with at others. This deals more directly with the core problem of spam, the sheer volume. Rather than attempt to send the entire e-mail to a central service for checking, most of these 'collaborative filtering' systems generate 'signatures' or 'hashcodes' of the message which can be more easily transmitted and compared than the message text itself. In some cases, as described in US Patent No. US6052709, fake e-mail accounts are created specifically to 'harvest' spam.

US 2003/0023736 discloses a method and system for filtering messages by providing a filter for filtering messages based upon an authorisation criteria. A message that satisfies the authorisation criteria is forwarded to a message receiver, while a message that fails to satisfy the authorisation criteria is not forwarded.

The problem with all content-filtering systems is simply that the spammers adapt to them. Initially they used basic techniques to 'disguise' key words with punctuation or mis-spellings; they then turned to insertion of large quantities of meaningless pseudo-text to 'confuse' the Bayesian filter techniques or collaborative checksum systems. Eventually, spammers will generate e-mails which are personalised and to all intents and purposes identical to legitimate e-mail, requiring human intelligence to sort out the difference. The inherent contradiction in all forms of filtering is that the tighter the filter the less chance there is of a false negative, but the greater of a false positive.

Another common method of attempting to deal with spam has been to filter at the receiving e-mail client on the basis of the (claimed) sender of the e-mail. This may take the form of a positive 'White-list' of senders whose e-mail will be accepted, possibly bypassing other checks, or a negative 'Black-list' of senders who will be blocked. Well known e-mail client software contains basic features allowing both of these. Most filtering solutions (see above), provide a White-list feature to ensure reduction of false positives. There are also solutions which provide fully implemented support for White-lists alone. This is a draconian solution which achieves a very low false negative rate through a high level of false positive for unknown senders.

Given that senders' addresses are routinely forged, the use of Black-lists on individual addresses is now dying out, although use across domains, or even entire countries, can still be effective. The success of White-lists requires that spammers do not yet forge addresses which are likely to be on receivers' White-lists - something that they are increasingly able to do through correlation of addresses by domain, or through illegal access to receivers' address books. Both issues will be to some extent ameliorated by tighter authentication of the senders' address, as discussed above.

Fundamentally, however, White-listing on its own suffers from the problem that e-mail will not be accepted from unknown senders. For most users, this is an unacceptable level of detachment from the community. White-listing remains however a useful component combined with other techniques.

One solution to the issue of accepting e-mail from users who are not in a White-list is to challenge the unknown sender to prove that they are at least human, and preferably someone with a reason to communicate with the recipient. US Patent No. US6546416 discloses challenge-response' (C-R) systems which allow this. In such systems, e-mail from an unknown sender is automatically responded to with a 'challenge' which hopefully only a human being can answer. This may be a visual or auditory perception problem, known as a 'Captcha', or a simple request for a statement of why the sender needs to communicate with the recipient.

A number of freely-available and commercial products and services use challenge-response. Some of such products use a central response service to handle the challenges.

One major issue with challenge-response in the absence of tight sender authentication is that the challenge is sent to a forged address. In the worst case, if a large number of e-mails were sent out with the same forged sender address, this can act as a 'distributed denial of service' (DDos) attack on the unfortunate real person with that address. At least, it can lead to confusion and irritation on the part of wrongly challenged parties.

Another issue with challenge-response is that the sender of a legitimate e-mail is not necessarily a human being. People who use the Internet regularly may receive a large number of automatically-generated e-mails including order confirmations, update notifications and mailing list traffic. In the worst case, a poorly implemented challenge-response system could end up challenging entire mailing lists each time it received an e-mail from the list.

Some form of challenge-response is however an essential component of any real-world solution which can, by necessity, inter-work with existing e-mail systems. A solution to the general problems of challenge-response is one of the objects of the present invention.

One of the reasons that spam on the Internet is such a massive problem where traditional physical 'junk' mail is only a fairly minor one is that the cost of sending an e-mail is effectively zero. Traditional physical mail of course has printing costs and delivery costs, which naturally limits the volume that can be economically sent. This in turn leads senders to target their output reasonably tightly so that in most cases the volume of 'junk' is manageable, and sometimes even welcome.

A number of proposals have therefore been made to add the equivalent of a conventional 'stamp' to e-mail. Some proposals require that the e-mail delivery system itself checks for the presence of a stamp, as in the conventional postal system, but it is also more easily implemented by an e-mail client simply refusing to accept e-mail without a stamp on it. The advantage of applying a cost to sending e-mail is that it directly addresses the economics of sending spam, without significantly harming ordinary low-level senders.

There are a number of distinct forms of proposed systems. Firstly, like conventional postage, the cost of the stamp is non-returnable and acts as a direct tax on e-mail. This is unlikely to be acceptable to the general public given that e-mail has traditionally been 'free', and hence seems to rely on sending ISPs stamping legitimate user's e-mail for them, which simply pushes the problem of identifying a legitimate user back to the ISP as before.

Secondly, there are proposals involving a stamp which may be optionally redeemed by the receiver if the e-mail is unwanted or equivalently refunded to the sender if the e-mail is wanted. Hence the stamp acts as a form of 'bond' that the e-mail is not spam. This however relies on a complex trust model and user action if receivers are not to either routinely return the bond or routinely redeem it.

Thirdly, there are proposals which always transfer value from the sender to the receiver, optionally with a social model which is supposed to encourage receivers to send the value back if the e-mail was acceptable. One such proposal is disclosed in US Patent No. US5999967. The difference between this and the second set of proposals lies only in whether the transfer of value happens by default for non-spam e-mail.

The disadvantage of all the above proposals is that they require significant interaction with a banking payment system every time an e-mail is sent or received. In addition, it removes the anonymity of both sender and recipient of e-mail, which may be unacceptable to some users.

One possible solution to this problem which has been suggested but never implemented is to use a form of anonymous electronic cash which can simply be stored by the recipient and re-used on outgoing e-mail. However, to avoid 'double spending' of the same cash this still either requires a verifying transaction back to the issuing bank, or a post fact traceback of the cash to the point that it was double-spent. In the latter case, one can be reasonably sure that the spammers will 'double-spend' (in the millions) anyway, and then disappear. In practice, no widely-supported digital cash infrastructure exists, and use for e-mail stamps is unrealistic.

It is therefore an object of the present invention to retain the core premise of a monetary cost of sending large volumes of e-mail, without requiring loss of anonymity, interaction with the banking system for conventional e-mail, or a full-scale anonymous digital cash solution.

Another approach disclosed in US Patent No. US6484197 is for the recipient to issue their own 'tokens' which senders can spend in order to send e-mails to them. This works for senders who are known to the recipient, but not for those who are not. It also requires effort from the recipient to manage the release of tokens.

An alternative model for the 'cost' of an electronic stamp has been proposed, in which the cost represents a number of machine cycles required to perform some algorithmic problem. This concept has been implemented in some prototype systems but a problem with such an approach is that it is hard to balance the number of cycles required so that it becomes uneconomic for well-funded, distributed spammers without interfering with increasing use of e-mail in the general population.

Fundamentally, only a true monetary cost for bulk e-mail can sufficiently deter spammers, since it unavoidably damages their entire business model, and hence some form of electronic stamp with a cash cost is the optimum solution for the long term. To appear 'fair' to ordinary users, a user who sends roughly as much e-mail as they receive should not be financially affected.

A workable system will also include a White-list to allow certain known people or services to send e-mail without requiring a stamp, and a challenge-response system to deal with unknown people who have not yet attached one. It is also crucial that value is not lost by sending stamps to a receiver who does not know what to do with them.

In summary therefore, the optimum system of this nature as taught by the prior art has the following faults:
1) Every exchange of e-mail requires, or can potentially require, a transfer of cash value from sender to recipient through the banking system or an analogue thereof. Given the volume of global e-mail this is an unacceptable processing load on a general purpose payments system.
2) Nothing other than a truly anonymous digital cash system can provide the requisite anonymity of both sending and receiving e-mail, and such a system does not currently exist in practical form.
3) To create a workable system without requiring a wholesale switchover of technologies requires the system to interoperate with existing e-mail clients and mailservers which will not initially understand stamps.

There is a requirement for a workable electronic stamp system which does not depend on continuous access to a banking payments system or a digital cash infrastructure, yet provides that a user sending broadly the same number of e-mails as they receive may do so without net cost. There is also a requirement for such a system that includes a managed challenge-response system which avoids some of the pitfalls of unmanaged challenges.

### SUMMARY OF THE INVENTION

An aspect of the present invention relates to a system of Reusable Mail Permits (RMP), which are generated by a central authority or authorities, the Permit Issuing Authorities (PIA). An RMP consists of a large unique number, along with indications of value monetary or otherwise, expiry date, issuing PIA and other 'housekeeping' information. RMPs are anonymous.

Specifically, an aspect of the present invention is able to:
1) Provide a mechanism for generation, purchasing and attaching reusable mail permits to outgoing e-mail.
2) Verify that a valid, unique, reusable mail permit of sufficient value has been attached to incoming e-mail.
3) Allow for single re-use of received reusable mail permits by receivers on subsequent outgoing e-mail, while preventing fraud through multiple use of the same reusable mail permit, without requiring a .full-scale electronic banking or digital cash system.
4) Automatically return the reusable mail permit to certain favoured senders.
5) Optionally allow redemption of some or all of the value of the reusable mail permit back into cash or conversion into products or services.
6) Provide for a 'White-list' of known senders who cannot or will not attach reusable mail permits.
7) Carefully manage the process of communication with unknown senders who have not attached reusable mail permits to allow them either to:
   a) Be manually added to the White-list
   b) Gain the means to attach a reusable mail permit to the current e-mail and to subsequent e-mails.

According to an aspect of the invention there is provided a method for regulating the reception of e-mail by an e-mail client acting for a recipient, the method comprising the steps of:
- receiving a first e-mail from an e-mail server by the e-mail client;
- checking for the presence of a reusable mail permit attached to said first e-• mail;
- performing a first action on said first e-mail if no reusable mail permit is attached thereto;
- otherwise requesting verification of said reusable mail permit from a reusable mail permit issuing service;
- performing a second action on the first e-mail if said reusable mail permit issuing service refuses to verify said reusable mail permit;
- otherwise delivering said first e-mail to the recipient;
- requesting renewal of said reusable mail permit of the delivered e-mail from said reusable mail permit issuing service; and
- storing the renewed reusable mail permit for attachment to a subsequent outgoing e-mail.

According to another aspect of the invention there is provided a system for regulating the transmission of e-mail by a sender to a recipient and the reception of the e-mail by the recipient, the system comprising:
- first sending means arranged to accept an outgoing e-mail from the sender;
- second sending means arranged to send the outgoing e-mail onwards to a remote destination;
- first receiving means arranged to accept an incoming e-mail from a remote source;
- second receiving means arranged to deliver the incoming e-mail onwards to the recipient;
- permit storage means arranged to store at least one reusable mail permit;
- attachment means arranged to attach at least one reusable mail permit fetched from the permit storage means to the outgoing e-mail accepted at the first sending means before sending on the second sending means; and
- extraction means arranged to extract and verify at least one reusable mail permit from an incoming e-mail accepted at the first receiving means before delivering on the second receiving means and storing the extracted reusable mail permit in the permit storage means
wherein the extraction means further comprises:
- Interface means arranged to interface to an at least one reusable mail permit issuing service;
- Verification means arranged to verify the validity of the reusable mail permit with a reusable mail permit issuing service; and
- Collection means arranged to collect a renewed reusable mail permit from the reusable mail permit issuing service for storage in the permit storage means
and wherein the system further comprises rejection means arranged to reject incoming e-mails where no acceptable reusable mail permit is attached and wherein the system is arranged such that the reusable mail permit is renewed if verified by the reusable mail permit issuing authority.

RMPs are attached to outgoing e-mails by a Permit Manager (PM) resident on the sender's computer, either as part of their normal e-mail client or acting as a proxy for it. Alternatively, the PM may be remotely installed at a central server as is common in the Internet. The receiving PM applies its own checks for acceptability, including checks for corruption, sufficient value, acceptable issuer and expiry date, and then verifies the validity of the received RMP with the issuing PIA before it will accept the e-mail. On receipt of a request for validation of a RMP, the PIA marks it as used and will fail any further requests to validate it. The PIA also initiates generation of a replacement RMP of the same value which can be collected by the verifying PM, and stored for use with subsequent outgoing e-mail. The verification and collection requests are correlated though a unique collection code invented by the PM using the unique number from the RMP (or any other RMP held from the same issuer), and a random component. Optionally, the PM may automatically respond to the incoming e-mail, attaching the replacement RMP.

In this way, users who receive roughly the same number of e-mails that they send are not 'taxed' for their e-mail. Receivers also have the option to credit back the cost of sending e-mails to acceptable bulk senders such as mailing lists. In the case that a receiver accumulates a large number of RMPs, the PIA may also provide a facility for redemption for cash, products or services, of some or all of the value of one or more RMPs, on request. The PIA may also apply an expiry period on RMPs to ensure an ongoing requirement for purchase of new RMPs for housekeeping and optionally to help fund its operations.

If e-mail is received without a valid or sufficient RMP, and the sender is not already present in a 'White-list' of allowed non-RMP senders, a challenge e-mail is returned. If the sender has a PM installed - as indicated by headers in the original e-mail - but did not attach a RMP because they were not aware that the receiver required one, or attached one of insufficient value, the challenge e-mail will be machine-readable and will trigger the automatic resending of the e-mail with a RMP of sufficient value attached (subject to a threshold for manual confirmation).

If the sender has no PM installed, the challenge e-mail will be human-readable and indicate two possible actions for the sender:
1) Instructions on how to obtain and install a PM which will then automatically provide a sufficient RMP
2) (At the receiver's option) A request to send a reason why the receiver should add the sender to the White-list of allowed non-RMP senders.

In the latter case, a summary of requests to join the White-list will be presented to the user on a regular basis, from which they can choose to allow or disallow based on the information presented. In both cases, the receiver also queues the incoming e-mail awaiting response to the challenge and delivers it when a suitable one is received.

To avoid flooding forged sender addresses with challenges or sending challenges to obvious spam, the sending of challenge e-mails is regulated through communication with a Response Management Service (RMS), which may be part of the PIA or an independent operation. The receiving PM forwards signature items describing the received e-mail to the RMS, which by comparing them with signatures from other PMs may determine and inform the PM whether:
a) A challenge should be sent immediately
b) The e-mail should be silently dropped
c) The e-mail should be delivered to the user
d) Further information, up to and including the entire e-mail, should be sent to the RMS
e) The question should be adjourned until further information from other PMs is available and/or the RMS is less busy.

According to another aspect of the invention there is provided a system for regulating the reception of an e-mail by a recipient, the system comprising:
- first receiving means arranged to accept an incoming e-mail from a remote source;
- second receiving means arranged to deliver the incoming e-mail onwards to the recipient;
- permit storage means arranged to store at least one reusable mail permit; and
- extraction means arranged to extract and verify at least one reusable mail permit from an incoming e-mail accepted at the first receiving means before delivering on the second receiving means and storing the extracted reusable mail permit in the permit storage means
wherein the extraction means further comprises: interface means arranged to interface to an at least one reusable mail permit issuing service; verification means arranged to verify the validity of the reusable mail permit with a reusable mail permit issuing service; and collection means arranged to collect a renewed reusable mail permit from the reusable mail permit issuing service for storage in the permit storage means and wherein the system further comprises rejection means arranged to reject incoming e-mails where no acceptable reusable mail permit is attached and wherein the system is arranged such that the reusable mail permit is renewed if verified by the reusable mail permit issuing authority.

According to another aspect of the invention there is provided a system for regulating e-mail communications between a sender and a recipient, the system comprising means at a sender for applying a reusable mail permit to an outgoing e-mail to a recipient, the recipient being arranged to block received e-mails which do not comprise a reusable mail permit and to extract said reusable mail permits from received e-mails which do comprise a reusable mail permit, said extracted reusable mail permit being renewed if verified by a reusable mail permit issuing authority and stored for subsequent application to outgoing e-mails sent by the recipient to other recipients.

According to another aspect of the invention there is provided a computer software program for regulating the transmission of e-mail from a sender to a recipient and the reception of e-mail by the recipient, the program being arranged to attach a reusable mail permit to an outgoing e-mail from the sender to the recipient, the software further being arranged to block received e-mails from other senders which do not comprise a reusable mail permit, the recipient being able to extract reusable mail permits from received e-mails and to store reusable mail permits for subsequent attachment to outgoing e-mails sent by the recipient to other recipients.

### BRIEF DESCRIPTION OF THE DRAWINGS

An embodiment of this invention will now be described by way of an example only and with reference to the accompanying drawings, in which:
FIG.1 is a block diagram indicating the main components in the process of sending and receiving e-mail and attaching and verifying Reusable Mail Permits;
FIG.2 is a structure diagram indicating one possible content and format of a Reusable Mail Permit;

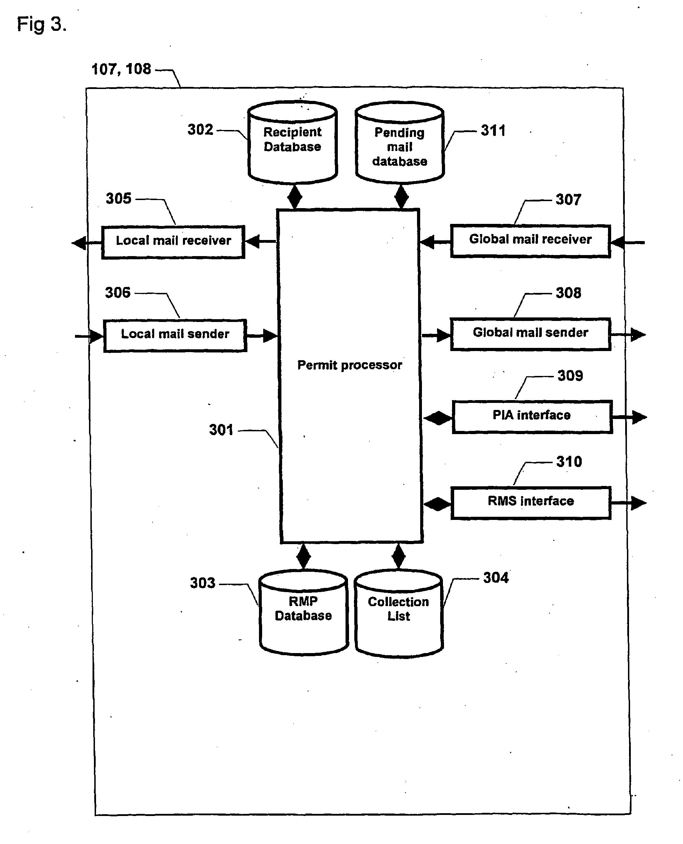

FIG.3 is a block diagram indicating the components of a Permit Manager;
FIG.4 is a UML sequence diagram indicating the sequence and flow of messages between the components for a normal successful transmission of e-mail between two Permit Manager-enabled e-mail clients;
FIG.5 is a UML sequence diagram indicating the sequence and flow of messages between the components for delivery of e-mail between two Permit Manager-enabled clients who have not previously communicated;
FIG.6 is a UML sequence diagram indicating the sequence and flow of messages between the components for delivery of e-mail between an initially non-Permit Manager-enabled client and a Permit Manager-enabled client; and
FIG.7 is a block diagram indicating the components of a Permit Issuing Authority.

### DETAILED DESCRIPTION OF THE PREFERRED EMBODIMENT

The detailed architecture and operation of the present invention is now disclosed through detailed description of the drawings.

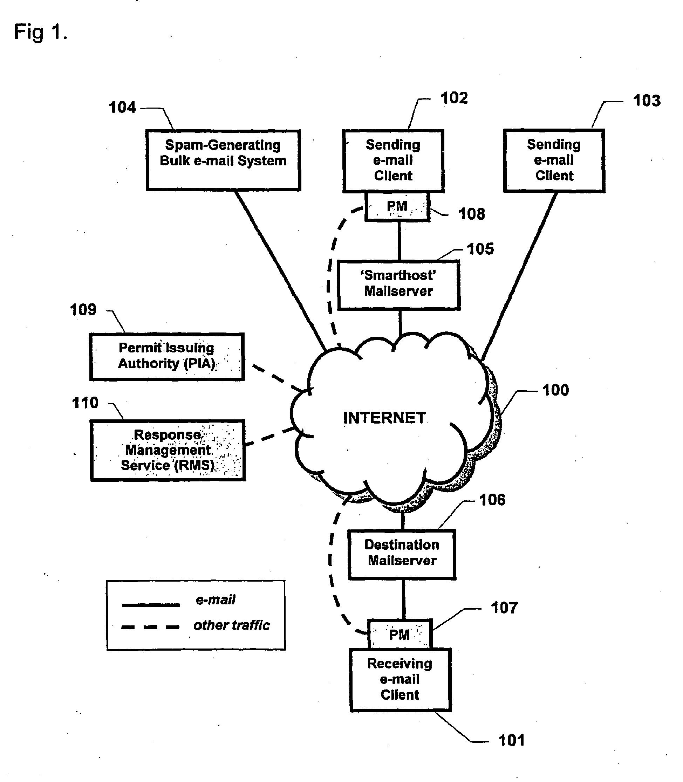

FIG. 1 illustrates the main components of the invention. Components 100,101,102,103,104,105,106 are commonly found elements of the existing global e-mail system. Components 107,108,109,110 (shaded) are additional components required by the present invention.

The components are connected together by the internet 100, or alternatively by any other public or private network in which the reception of e-mail from unknown senders is to be regulated. E-mail is received by a receiving e-mail client 101 such as are widely available in the industry. E-mail is sent by e-mail clients 102, 103 which are also industry-standard e-mail programs, and by at least one custom bulk e-mail sending system 104 under the control of a spammer. For the purposes of illustration e-mail clients 102, 103 are described as senders and e-mail client 101 as a receiver, but in practice all clients are both senders and receivers at various times. Bulk sender 104, however, is often incapable of receiving e-mail.

For the purposes of illustration e-mail client 102 is assumed to be under the control of a legitimate sender who has installed the software implementing the present invention, while e-mail client 103 is assumed to be under the control of a sender who has not installed the requisite software, but nevertheless would be considered by the owner of receiving e-mail client 101 to be a legitimate correspondent, unlike bulk sender 104.

E-mail is commonly sent from originating e-mail clients 102, 103 and bulk sender 104 by a sender-initiated protocol such as SMTP, and may pass through zero, one or more 'Smarthost' mailservers 105 before being delivered to the destination mailserver 106, where it is stored, and from which it is commonly fetched by receiving e-mail client 101 through a receiver-initiated protocol such as POP3 or IMAP. Alternative arrangements of delivery protocols and mailservers are common and obvious to those skilled in the art and are not material to the present invention, which operates on an end-to-end basis between e-mail clients.

All outgoing and incoming e-mails from and to e-mail clients 101, 102 are passed through Permit Managers (PM) 107, 108, which may be built into the e-mail clients 101, 102, or alternatively act as a proxy for them, intercepting the e-mails being sent or received, acting on them, storing them and/or modifying them, and passing them onwards toward their destination.

PM 108 communicates with one or more Permit Issuing Authorities (PIA) 109 in order to obtain Reusable Mail Permits (RMPs) for attachment to outgoing e-mail. In an exemplary embodiment, the RMP consists of a large unique number, along with indications of value, expiry date, issuing PIA and other 'housekeeping' information. This exemplary embodiment has the advantage that RMPs are anonymous. In a preferred embodiment, a cyclic redundancy check (CRC) or other form of verifiable redundancy such as is well known in the art is included as part of the RMP to aid validation. The structure and format of the RMP is more completely disclosed below.

Upon receipt of e-mail with attached RMPs, PM 107 communicates with the PIA(s) 109 to verify the received RMPs and to obtain replacements, which it stores and uses on subsequent outgoing e-mail of its own.

On receipt of an e-mail with no RMP attached, PM 107 checks whether the sender is in a White-list of allowed non-RMP senders, and if so, delivers the e-mail as normal. If not, it communicates with a Response Management Service (RMS) 110 in order to obtain advice as to a suggested response to the received e-mail, which may include the sending of a challenge e-mail as disclosed below.

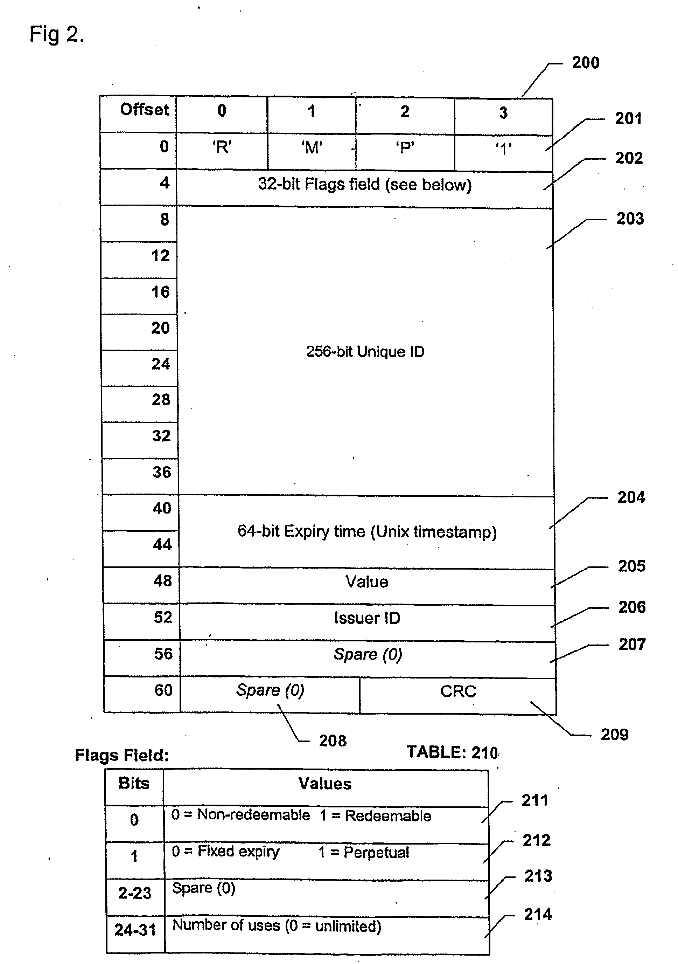

FIG. 2 is a data-structure diagram indicating an exemplary content and format of a RMP 200. The structure is shown as a 64-byte (512-bit) binary block, but other sizes and formats of data are possible and easily designed by one skilled in the art. There are advantages and efficiencies in implementation, particularly in hardware, of choosing size of a power of two and 4-byte alignment of the fields within the structure. 'Spare' fields have been left for future expansion to accommodate this. Format field 201 is a fixed value which can be used to identify the RMP's type and version within general protocols. The use of the textual characters 'RMP1' is exemplary and aids in debugging and protocol analysis.

Flags field 202 is a bitmap of individual flags and small fields as defined in table 210. In the present invention, the following flags and fields have been allocated:
Redeemable flag 211 indicates whether the RMP is redeemable.
Perpetual flag 212 indicates whether the RMP's expiry time will be extended upon renewal, or whether it remains fixed for the RMP's lifetime
Number of uses field 214 indicates the maximum number of uses of the RMP. A value of zero indicates that usage is unlimited, subject to the overall expiry time.

The remaining flags 213 are set to zero as defaults for future expansion.

Unique ID field 203 is a 32-byte (256-bit) unique number which is allocated by the issuing PIA. IDs may be issued at random, but the PIA must ensure that no two IDs with the same value are outstanding at the same time. In a preferred embodiment of the PIA, the PIA ensures that the first 32 bits of the ID are unique, to improve efficiency of lookup, and pads the remaining 224 bits with random data as a redundancy check to prevent forgery.

Expiry time field 204 gives the expiry time of the RMP as a 64-bit timestamp in Unix 'time_t' format - that is to say, number of seconds since midnight UTC on 1/1/1970. This format provides the maximum generality; other formats are possible and will be obvious to one skilled in the art. Making the timestamp UTC (GMT) rather than local time provides for correct operation between clients in different time zones.

Value field 205 gives the value of the RMP as an integer multiple of some small currency fraction; for example, USD 0.00001 or EUR 0.00001. Choice of this fraction ensures a maximally useful range of values that can be represented within the 32-bit field. In an exemplary embodiment, the value field represents a value within a 'virtual currency' maintained through the co-operation of the issuing PIAs, and subject to will be via client-initiated polling such as through POP3 or IMAP, but other mechanisms including direct delivery by SMTP or direct delivery to an 'InBox' are possible and obvious to one skilled in the art.

Local mail sender 306 accepts outgoing e-mail from local e-mail clients 101, 102. In an exemplary embodiment this will be via SMTP, but other mechanisms are possible and obvious to one skilled in the art.

Communicating with mailservers in the outside world are global mail receiver 307 and global mail sender 308. Global mail receiver 307 provides means to receive incoming e-mail from external mailservers 106. In an exemplary embodiment, reception is performed through POP3 or IMAP. In an alternative embodiment, reception is performed through SMTP. Other protocols and mechanisms are possible and obvious to one skilled in the art.

Global mail sender 308 delivers outgoing e-mail to external 'smarthost' mailserver 105, or directly to destination mailservers 106, or through other intermediate servers not shown. In an exemplary embodiment, this delivery is performed through SMTP, but other protocols and mechanisms are possible and obvious to one skilled in the art.

PIA interface 309 manages transactions between the PMs 107, 108 and RMP-issuing PIA 109. These transactions may be carried in binary messages, XML messages, CORBA requests, SOAP requests or other distributed system technologies such as are well known in the art. In a preferred embodiment, these transactions are encrypted in a public key cryptosystem such as RSA, using public keys configured into the PM or obtained through other trusted means such as DNS or an X.509 certificate chain.

RMS interface 310 manages transactions between the PMs 107, 108 and RMS 110. These transactions may be carried and encrypted as with transactions between PMs and PIA described above. In an alternative embodiment, the PIA and RMS interfaces are one and the same.

Pending mail database 311 is a database of e-mail messages that have been recently sent but for which a challenge may be received requiring them to be resent. In an exemplary embodiment, e-mails are keyed in the database by their RFC2822 Message-ID. If the sending e-mail client does not provide a valid Message-ID, the PM invents one and attaches it to the outgoing e-mail, as is standard behaviour for mailservers. E-mails are kept in this database for a configurable period of time before it is assumed they have been successfully delivered and they are deleted.

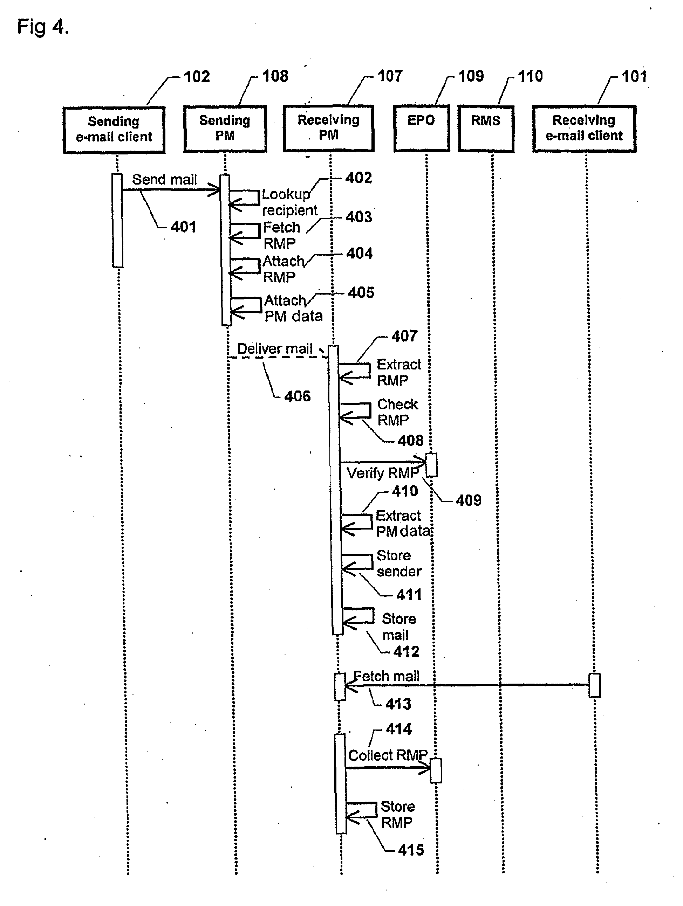

FIG. 4 is a simplified UML sequence diagram showing the sequence and flow of messages between components for normal delivery of e-mail between two PM-enabled e-mail clients who have previously communicated.

The diagram shows an abstraction of the process, and the messages between components and within a component may be implemented in any message-passing or Remote Procedure Call (RPC) technology, such as are well known in the art, including but not limited to direct call, SOAP, CORBA, Java RMI, DCOM, .NET, HTTP, XML messages, ASN.1 messages, or other standardised or proprietary textual or binary protocols.

For the purposes of exemplary embodiment, the PMs are shown as separate components, but the process is equally applicable if one or both of the PMs are built into their respective e-mail clients and the PM and e-mail client interact through normal procedural call.

The process begins with the sending e-mail client 102 sending 401 an e-mail. In the exemplary embodiment shown, the sending PM 108 acts as a proxy for the e-mail client, and hence accepts the e-mail through SMTP at local mail sender 306 like any other 'smart' mailserver. The sending e-mail client 102 may be manually or automatically configured to send outgoing e-mail via sending PM 108, or the local computer or network may be configured to transparently forward the SMTP traffic to the PM without the knowledge of the client. Both techniques are well known in the art in relation to e-mail virus checking. Methods of intercepting and modifying e-mails in other e-mail delivery protocols will also be obvious to those skilled in the relevant protocol.

The sending PM's first step 402 is to look up the recipient of the e-mail in recipient database 302. There are three possible cases:
1) The recipient is believed to have a PM installed
2) The recipient is believed not to have a PM installed
3) Nothing is known about the recipient one way or the other

The first case is the case shown in Fig. 4. In a preferred embodiment, having determined that the recipient is believed to have a PM, the sending PM 108 checks information in the recipient database 302 concerning the minimum value of RMP required by the recipient to allow receipt of e-mail. In a preferred embodiment, the sending PM 108 also checks information about the RMP flags required by the receiver.

The next step 403 is to fetch a suitable RMP 200 from RMP database 303. Assuming that the sending PM has a valid RMP of sufficient value and/or flag settings available, the next step 404 is to remove it from RMP database 303 and attach it to the e-mail. In a preferred embodiment, the value may be made up from multiple smaller RMPs, and all mentions of a singular RMP in the following should be taken to include the plural. In a more preferred embodiment the attached RMP is stored in a separate database, or temporarily marked as having been used, in case the transmission is rejected and the RMP needs to be recovered. In the exemplary embodiment using SMTP, attaching the RMP to the e-mail may be performed by inserting RFC2822 extension headers with a textual encoding of the RMP data, such as in hexadecimal or Base64 or other encoding schemes such as are well known in the art. Other protocol-specific methods of attaching an RMP to an e-mail message will be obvious to those skilled in the relevant protocols.

In a more preferred embodiment, a public key for the receiving PM 107 is also looked up in the recipient database 302 in the first step 402, and the RMP is encrypted with this public key in a public-key cryptosystem such as RSA, or others that are well known in the art, before attachment to the e-mail. In a still more preferred embodiment, to reduce processing requirement at the PIA and remove predictable plaintext, only the Unique ID 203 of the RMP is encrypted with the public-key.

If the RMP database 303 does not have an RMP of sufficient value available, an error will be returned to the user notifying them that they need to purchase more RMPs. In an exemplary embodiment, this will take the form of an e-mail returned through local mail receiver 305. The original e-mail is stored in pending mail database 311 until sufficient RMPs are available. If the user purchases additional RMPs (described below), or an RMP arrives from incoming e-mail, the PM will retrieve the pending e-mail and resume the sending process.

In all cases, the sending PM's next step 405 is to attach PM data to the e-mail indicating the presence of the sending PM. In an exemplary embodiment, this is performed by attaching RFC2822 extension headers. In the preferred embodiment where encryption is used, the PM data also indicates the sending PM's public key. In the further preferred embodiment in which a minimum value and/or flag settings of RMPs for receiving e-mail is applied, this is also indicated in the PM data.

In a more preferred embodiment (not shown) the sending PM 108 always stores the e-mail in pending mail database 311, in case the RMPs are rejected by the receiving PM 107 due to out of date data about it - for example, the minimum value of RMP required by the receiving PM 107. In this case, the sent e-mail is removed from the pending mail database 311 after a reasonable period of time for any error to be returned.

The final step 406 for the sending PM 108 is to send the modified e-mail onwards to its destination using the standard e-mail mechanisms such as SMTP, through the global mail sender 308. Step 406 is shown as dotted and asynchronous because it may involve several intermediate mailservers 105, 106. The receiving PM 107 may receive the e-mail through SMTP itself, or more usually the destination mailserver 106 will receive it through SMTP and store it until the receiving PM 107 polls for it using a receiver-initiated protocol such as POP3 or IMAP. Such protocols and mechanisms for delivery of e-mail, and variations thereof, are well known in the art and are immaterial to the generality of the present invention.

The receiving PM's first step 407 is to extract the RMP or RMPs 200 (if any) from the e-mail. In the exemplary embodiment using SMTP, this may be performed by extracting and decoding the extension headers inserted at 404. In the more preferred embodiment in which the RMP is encrypted, this step further comprises decrypting the RMP with the receiving PM 107's private key.

The next step 408 for the receiving PM 107 is to check the prima facie acceptability of each RMP insofar as it is able to using its own information. This includes:
1) Checking the RMP has not been corrupted, using the CRC 209
2) Checking the RMP is of a correct type and version, using the format field 201
3) Checking the RMP has acceptable flags, using flags field 202
4) Checking the RMP has not expired, using the expiry time field 204
5) Checking the RMP value is sufficient to allow reception of the e-mail, using the value field 205
6) Checking the RMP was issued by an acceptable issuer in a list of acceptable issuers, using issuer ID field 206

In each case, if the acceptability check fails, the e-mail will be deleted and an error message may be returned to the sender, subject to management by the RMS 110 as more completely disclosed below. In a preferred embodiment, if the acceptability check fails, a machine-readable message is returned which indicates the reason for failure and gives the sending PM 108 a chance to resend the e-mail with a more suitable RMP attached and to recover any RMPs that may have been attached to the original e-mail.

In a more preferred embodiment, to avoid loss of RMPs that are rejected by recipients, the sending PM 108 records all RMPs sent out and if they are rejected, returns them to RMP database 303. In a still more preferred embodiment, to prevent receiving PM 107 fraudulently rejecting an RMP while nevertheless reusing it itself, the sending PM 108 requests reverification at the issuing PIA of any RMP which is rejected by a recipient.

If the RMP appears prima facie acceptable to the receiving PM 107, its next step 409 is to verify the RMP with the issuing PIA 109. In an exemplary embodiment, the receiving PM looks up a network address of the issuing PIA from the issuer ID field 206 of the RMP in an internal table which may be refreshed from time to time. In a more preferred embodiment, the receiving PM looks up the issuer ID 206 in a distributed database such as the global Domain Name System (DNS) or X.500. In the case of DNS, the receiving PM may look up an address such as "12345.issuers.rmp.net", where '12345' is the value of the issuer ID field 206, and 'issuers.rmp.net' is any DNS domain registered and configured into the PM for this purpose.

On obtaining an address for the issuing PIA 109, the receiving PM 107 requests validation of the RMP 200 by the issuing PIA. The receiving PM sends the entire RMP to the issuing PIA for validation. In an exemplary embodiment, the receiving PM also sends a collection code by which a later request for collection of a replacement RMP may be uniquely identified. The specification of the collection code by the PM rather than the PIA allows better recovery in case of toss of messages or failure, since the PM is able to retry the transaction without requiring return traffic from the PIA. In a preferred embodiment, the collection code is a large, unique, unforgeable number, which includes an element of uniqueness, such as the first 32 bits of any RMP held by the PM with the same issuer ID as the one being checked, and an element of randomness, such as a 32-bit random number. In a further preferred embodiment the receiving PM also sends its public key so that any reply message from the PIA may be secured. In a still more preferred embodiment, the receiving PM invents a symmetric session key for the transaction, and transmits this encrypted with the PIA's public key with the initial verification request. This session key can then be used to encrypt both the RMP itself and subsequent collection requests and responses, further reducing the workload of the PIA. Other methods of establishing session keys using a public key infrastructure are well known in the art.

On receipt of a request for validation of a RMP 200, the issuing PIA 109 may apply its own prima facie check for acceptability of the submitted RMP. Having checked that the submitted RMP appears acceptable and was issued by this PIA (by checking the Issuer ID 206), it then looks up the Unique ID 203 in an internal database of issued IDs. In the preferred embodiment wherein the first 32 bits of the Unique ID 203 are guaranteed to be unique, the PIA can use this as the lookup key more efficiently than searching for the entire 256-bit ID. In an exemplary embodiment of the lookup process, at least one hash table is used to make the lookup time approximately constant irrespective of the number of IDs held in the database.

Having looked up the Unique ID 203 the PIA then compares the entire submitted RMP 200 against a copy stored in its database referenced by the Unique ID. Only if the submitted RMP and the stored RMP are identical in every respect is the submitted RMP considered valid. This check prevents any variation of the fields of the RMP during its lifetime - for example, to alter the expiry time or value.

In an alternative embodiment of the present invention, in which lookup and block comparison are very efficient, the prima facie check is omitted, since the comparison of the entire RMP is sufficient to verify its validity in any case.

If the submitted RMP exists in the database and has not been modified, the issuing PIA 109 returns a success indication to the receiving PM 107. In a preferred embodiment, this success indication also includes an indication of a time at which the receiving PM may collect a replacement RMP. This time may be varied by the issuing PIA to spread its load in issuing replacement RMPs. In a more preferred embodiment, the success indication also includes a new Issuer ID from which the collection should be made, allowing an issuing PIA to hand its work to another issuing PIA should it need to do so for reasons of overload or imminent shutdown.

If the submitted RMP is prima facie unacceptable, or does not exist in the database, or has been changed since it was issued, a failure indication is returned to the receiving PM 107 and the error logged for manual investigation. Repeated failures of this nature may indicate an attempt at fraud on the system.

In a further preferred embodiment, all transactions between the PMs 107, 108 and the issuing PIA 109 are encrypted under a public-key cryptosystem such as RSA with the public key of the issuing PIA, which may be determined either from an internal table or through lookup in a distributed database such as DNS, as with the network address of the issuing PIA. In an alternative embodiment, all transactions take place encrypted by a symmetric session key which is established using the public key of the issuing PIA. Such mechanisms for establishing symmetric session keys using public key infrastructure are well known in the art.

In a still further preferred embodiment, all transactions between the issuing PIA 109 and the PMs 107, 108 are encrypted under a public-key cryptosystem such as RSA with the public key of the PM in question, which may be retrieved from the message received at step 409. In an alternative preferred embodiment, all transactions between the issuing PIA and the PMs are encrypted under a temporary symmetric session key, which may be retrieved from the message received at step 409, itself being encrypted with the PIAs public key. Such mechanisms for establishing symmetric session keys using public key infrastructure are well known in the art.

If the receiving PM 107 receives a success indication from verification step 409, the receiving PM 107's next step 410 is to extract any PM data attached to the e-mail inserted at 405. In an exemplary embodiment, this is done by searching for specific RFC2822 extension headers in the message. If PM data is available, the receiving PM's next step 411 is to store the PM data in the recipient database 302 against the sender of the e-mail, ready for use with any reply.

In a preferred embodiment, if the sender is new or their PM data has changed, and their minimum acceptable RMP value is more than a user-configurable value, or they require certain configurable RMP flags, the user will be asked to manually authorise the storage of the sender in the recipient database and consequent sending of high-value or specially-flagged RMPs. In an exemplary embodiment, this is performed by returning a query e-mail to the user through local mail receiver 305, quoting a subject referencing the e-mail's Message-ID. If the user responds to the query e-mail, the sender may be stored in the database. Failing that, the sender may be ignored, or alternatively an entry made in the recipient database to block outgoing e-mail for the sender's address.

The receiving PM's next step 412 is to store the received e-mail for subsequent fetch by the receiving e-mail client 101 through local mail receiver 305. At some time later 413, the receiving e-mail client 101 may poll for new e-mail and the received e-mail will be delivered to the user. If the PM is built into the e-mail client, at step 412 it will simply store the received e-mail in the user's 'InBox' as usual.

Following successful verification of the received RMP, the receiving PM will also store the collection code, collection time and collection issuer ID returned by the issuing PIA in collection list 304.

Should the receiving PM 107 receive a failure indication from verification step 409, it will delete the e-mail and optionally return an error e-mail to the sender of the received e-mail, subject to management by the RMS 110 as more completely disclosed below.

At some other time, before or after the delivery of the e-mail at 413, the next step 414 of the receiving PM 107 is to work through the collection list 304, collecting renewed RMPs from the appropriate issuing PIA 109. The process of renewal of RMPs by the issuing PIA is described in detail below.

In the preferred embodiment wherein the issuing PIA supplies a collection time as part of the success indication in verification step 409, the receiving PM waits until that time before initiating the collection of the replacement RMP at step 414. In the more preferred embodiment wherein the issuing PIA supplies a replacement issuer ID as part of the success indication, the receiving PM looks up the network address (and optionally, public key) of the replacement issuer at step 414 as at step 409.

In an alternative embodiment of the present invention (not shown), the steps of verifying a RMP 409 and collecting a RMP 414 may be combined into a single request and response to the issuing PIA. Other methods of arranging the communications between PM and PIA to verify and replace a RMP will be obvious to one skilled in the art.

Having obtained a replacement RMP, the receiving PM's final step 415 is to store it into RMP database 303, ready for use on a subsequent outgoing e-mail of its own. When sending a new outgoing e-mail, the initially receiving PM 107 then acts like sending PM 108 and the cycle begins again.

In a preferred embodiment of the present invention (not shown), the receiving PM 107 may be configured to automatically return an e-mail carrying a RMP of equivalent value to specific senders or classes of senders of received e-mail. This allows selected senders, such as e-mail list servers and auto responders, to send repeated e-mail to the receiving e-mail client without incurring any net cost.

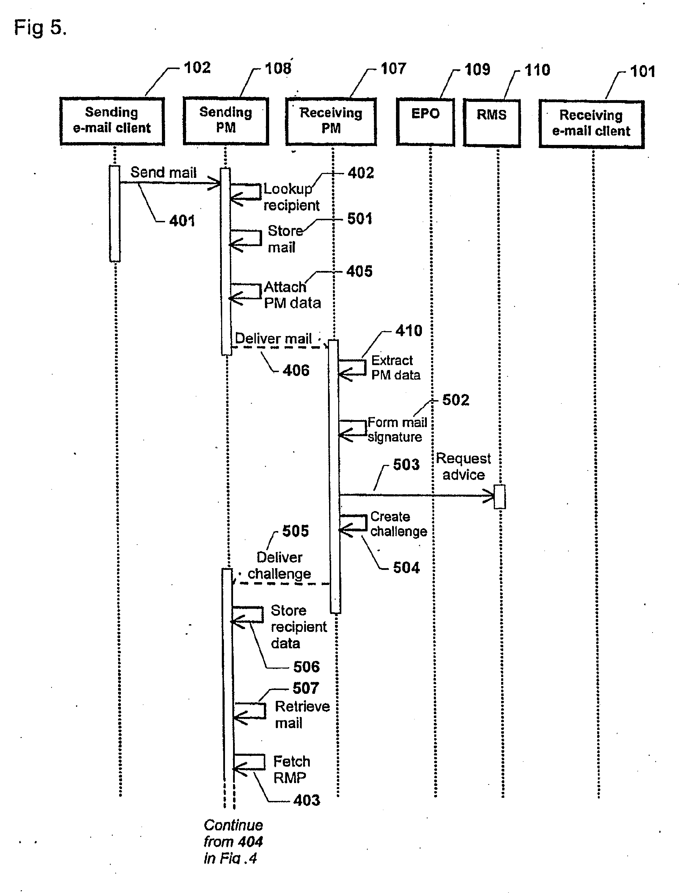

FIG. 5 is a simplified UML sequence diagram showing the sequence and flow of messages between components for delivery of e-mail between two PM-enabled e-mail clients who are communicating for the first time and hence not yet aware that the other has PM technology installed.

The process begins with sending step 401 and recipient lookup step 402 as in Fig. 4, In this case, however, the lookup of the recipient will fail, and no RMP will be used (steps 403, 404 are absent). Instead, the sending PM 108 takes the step 501 of storing the e-mail in pending mail database 311 in case a challenge is received. It then continues as in Fig. 4 to attach its own PM data at 405 and deliver e-mail to the recipient at 406.

Receiving PM 107 checks for the presence of a RMP by looking for extension headers in the received e-mail, and finding none, skips steps 407-409. It does however find headers indicating PM data, so extracts the PM data at 410, but because no RMP is present it cannot perform steps 411-415. Instead it performs new steps 502, 503 of forming a signature of the e-mail and requesting advice from the RMS 110 on whether to challenge the sender to attach a RMP.

Forming signatures of e-mails is well known in the art in systems which use collaborative filtering techniques. The signature is a digested form of the e-mail which represents the key unique features of it without requiring the entire e-mail to be sent, which would waste bandwidth and may be a violation of privacy. In an exemplary embodiment one-way hash techniques such as SHA-1 are used to form a signature of significant headers and multiple overlapping sections of the content, providing some proof against addition of random text to the message. Further techniques of extracting identifying information and forming privacy-protected signatures will be obvious to one skilled in the art.

On receipt of a request for advice on an e-mail from its signature, the RMS makes use of techniques well known in the art of collaborative filtering, and others as are described below, to decide whether the e-mail is:
1) A legitimate e-mail
2) A clear attempt at using the challenge mechanisms as a denial-of-service (DoS) attack
3) A clear attempt at spam
4) Uncertain

Depending on which determination is made, the RMS may return an advice result to the receiving PM which advises it to do one of:
1) Delete the e-mail immediately
2) Deliver the e-mail immediately to the user without responding with a challenge;
3) Respond with a challenge immediately;
4) Send more detailed signature to the RMS for further advice;
5) Send the entire e-mail to the RMS for further advice;
6) Wait for a period of time and repeat the request for advice; the time specified either as an elapsed time or an absolute time.

These options allow the RMS to manage the response to a widespread spam or DoS attack, while ensuring that potentially legitimate e-mail is allowed through. The failsafe response in cases of uncertainty is to delay advice until further information from other PMs is available, and then if still uncertain, to advise the sending of a challenge. Only if the e-mail is clearly spam within a user-configurable margin of error will immediate deletion be advised. Similarly, only if the e-mail is clearly legitimate within a user-configurable margin of error from a non-PM enabled sender will immediate delivery be advised. In this way, the user - or RMS on behalf of the user - can manage the balance between false positives, false negatives and challenges for optimum results.

The outcome of possibly multiple, time-spaced requests to the RMS for advice on a given e-mail is therefore to delete the e-mail immediately and stop delivery; continue with delivery immediately at step 412, or to challenge the sending PM to attach a RMP.

In the latter case, the receiving PM then performs new steps 504, 505 of creating and delivering a challenge e-mail back to the sending PM. Since the receiving PM knows the PM data of the sending PM, the challenge e-mail can be largely machine-readable. The challenge e-mail refers to the original e-mail by its RFC2822 Message-ID, and also includes the PM data of the receiving PM. In a preferred embodiment, the PM data includes the minimum acceptable RMP value and/or flag values needed to deliver the original e-mail. In a further preferred embodiment, the value quoted may be dependent on the sender's identity or another quality of the original e-mail.

Delivery of the challenge e-mail 505 is the reverse of the delivery of the original e-mail at 406, using the standard procedure for delivering reply e-mail as is well known in the art.

On receipt of a challenge e-mail, identified by the presence of further special headers, the sending PM's first step 506 is to store the PM data quoted into its recipient database 302. This will allow it to send e-mails normally to this recipient in all future cases. As before at 411, if the recipient's minimum acceptable RMP value is more than a user-configurable value, or requires certain configurable RMP flags, the user will be asked to manually authorise the storage of the recipient in the recipient database.

The sending PM's next step 507 is to retrieve the original e-mail from its pending mail database 311, making use of the Message-ID quoted in the challenge e-mail. Having the e-mail and valid recipient data in hand, it is then able to retry the sending process from step 403, Fig. 4, which should complete normally without further challenges. It is important that the original recipient's address is used to deliver the e-mail at step 406, not the return address for the challenge, to avoid attack from third parties wishing to fraudulently extract RMPs from the sender.

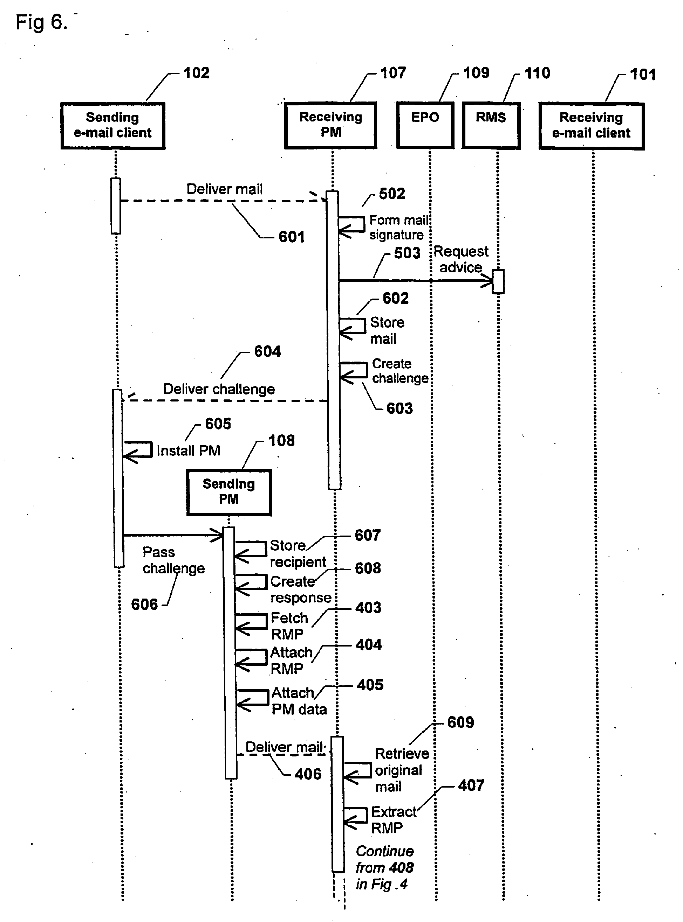

FIG. 6 is a simplified UML sequence diagram showing the sequence and flow of messages between components for delivery of e-mail between an e-mail client which does not have PM technology installed and one that does.

In the first step 601, the sending e-mail client 102 delivers e-mail to the receiving PM 107 by the common e-mail protocols, or others, as described above. Note that there is no sending PM 108 present (yet). Since the receiving PM finds neither PM data nor RMP attached, it immediately moves to challenge the e-mail. Firstly it requests advice on how to manage the challenge from the RMS 110 as previously shown in steps 502, 503. Assuming the RMS indicates that a challenge is required, the receiving PM's next step 602 is to store the e-mail in pending mail database 311, marking it as pending for reception rather than for sending as before.

The next step 603 is to create a challenge e-mail. This time, however, the e-mail is designed to be read by a human, and contains an explanation of the RMP system, why the sender's e-mail has not yet been delivered, and instructions on how to obtain and install a Permit Manager in order to provide a RMP to allow it to be delivered. In a preferred embodiment, the instructions are sent in a language specified by the user at configuration time. In a further preferred embodiment, the instructions are sent in multiple languages. In a still more preferred embodiment, the first or only language the instructions are sent in is dependent on the geographical location of the sender as determined by lookup in an IP address allocation database, domain database, or otherwise.

The e-mail's instructions will also have encoded in them the PM data of the recipient, including in preferred embodiments the receiving PM's public key and minimum RMP value, together with the Message-ID of the stored e-mail. In a preferred embodiment, this data is encoded into the URL link that the user clicks on to initiate the install process.

The receiving PM then delivers 604 the challenge message back to the sending e-mail client, using the standard methods for sending reply messages. In this case, it is to be assumed the user agrees to install a PM at step 605; if not, the challenge will never be responded to and the original e-mail will eventually time out of the pending mail database 311, and be silently deleted.

However, the original sender may wish to (or be forced to), reply manually to the challenge rather than install a PM. In this case the sender should provide a brief explanation as to the reason for not installing the PM and must use the standard method of sending a reply message. In a preferred embodiment, in order that the receiving PM 107 can identify the manual response, it creates a distinguished Message-ID for the challenge e-mail which will conventionally be quoted in the 'References' header of the manual response. In a more preferred embodiment, this Message-ID will also include a reference to the original e-mail. The receiving PM will then extract the manual response from the returned challenge and present it to the recipient during the normal periodic reporting mechanism. The recipient may then wish to read the original e-mail and/or White-list the sender. In the more preferred embodiment, the original e-mail can be fetched from the pending mail database 311 using the e-mail reference extracted from the References headers in the returned challenge.

In a still more preferred embodiment, to avoid providing a loop-hole for spammers to send free text to recipients, thus bypassing the system, any manual response is first filtered by the RMS 110. Large numbers of apparent manual responses from the same address, or other indicators of spam content, can be used to filter the manual responses before presentation to the original recipient.

Once the sending PM 108 is installed, it can continue the process of sending a RMP with an automatic response message. In order to construct the response message and properly attach the RMP it requires the recipient address, PM data and Message-ID from the challenge message returned to the non-PM e-mail client at 603, 604. This is shown as step 606. In a preferred embodiment the challenge data is passed through the install URL to the download service which provides the PM software, where it may be directly configured into the downloaded package, or stored against a reference returned with the downloaded package, from which it may be fetched by the newly installed PM. In an alternative embodiment, the challenge data is encoded in locally stored data such as browser cookies which the newly installed PM is able to access. Other means of passing challenge data to the newly installed PM will be obvious to one skilled in the art.

In an alternative embodiment, the challenge data passed to the newly installed PM 108 consists only of the recipient address and Message-ID, and the newly installed PM 108 immediately requests the PM data of the recipient 107 by means of a specially-encoded e-mail.

Once the newly installed sending PM 108 has the recipient address and the PM data from the challenge e-mail, it can store 607 the recipient details in recipient database 302, ready for further e-mails to this recipient. It can also create 608 an automatic response e-mail including the Message-ID of the original e-mail, to be sent back to the receiving PM. It then goes through the normal steps 403, 404, 405, 406 of finding and attaching a RMP and its own PM data to this response message, and delivering it to the receiving PM 107.

Receiving PM 107's first step 609 on receiving an authentic response to a challenge, which it identifies by the presence of further special headers, is to retrieve the original e-mail stored at 602 by looking up the Message-ID quoted in the response. Once the original e-mail is restored, the receiving PM can complete steps 407-415 as before to allow delivery of the original e-mail, except that the PM data and RMP are obtained from the response e-mail rather than the original e-mail itself.

If PM-enabled e-mail client 102, 108 sends an e-mail to a non-PM enabled e-mail client, it will follow Fig. 5 up to step 406 in which the e-mail is delivered to the non-PM enabled e-mail client. Since the attached PM data is encoded in extension headers, the receiving non-PM enabled e-mail client will display the e-mail as usual, and will not respond with a challenge. After a time, the sent e-mail will time out of the pending mail database 311, and will be deleted with no further action.

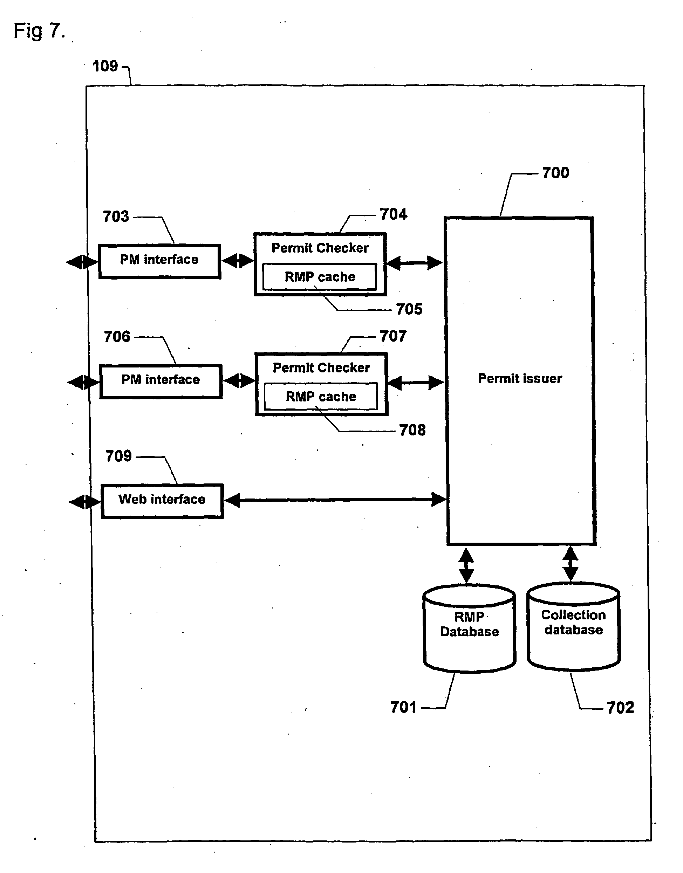

Fig. 7 is a block diagram showing the structure of a Permit Issuing Authority (PIA) 109. The definition of a PIA should be regarded as functional and not limited by the structure described herein.

The PIA 109 comprises a central permit issuer 700, which maintains a database of issued RMPs 701, and a database of outstanding collections 702. Attached to the permit issuer 700 are one or more permit checkers 704, 707, each with a PM interface 703, 706 which accept requests from PMs to verify RMPs and collect new ones as previously described. Also attached to permit issuer 700 is a Web interface 709 which provides user access to the service for the purposes of purchase and redemption of RMPs as described below.

The primary technical issue for the PIA is one of scalability. The permit issuer 700 has to be a single logical unit, because it controls a single database of RMPs 701 and list of outstanding collections 702. Systems for delivering highly-scalable database instances are well known in the art. However, all extraneous functionality other than the critical functions of maintaining the RMP database and collection list should be removed from the core permit issuer and distributed to multiple devices.

The highest load on the PIA is in verifying submitted RMPs as at 409, Fig. 4. This requires a number of prima facie acceptability tests, a lookup step of the unique part of the RMP, and a comparison step of the whole submitted RMP against a stored copy, as described above. In the more preferred embodiment in which the RMP is encrypted, this step further comprises decrypting the RMP before verifying it. These processes are best performed by a cluster of dedicated servers each containing an in-memory cache of valid RMPs 705, 708. Lookups in memory augmented by hash tables are extremely fast, and the memory requirements are manageable even for several million outstanding RMPs.

A permit checker 704, 707 which verifies the validity of a RMP can immediately return a response to the requesting PM 107, indicating success or failure. In a preferred embodiment, if the verification was successful a collection time is also returned. In a still more preferred embodiment, an alternate issuer ID is returned if the issuing PIA_wishes to offload the renewal and collection. The verifying permit checker 704, 707 also sends an update message quoting the original RMP and the PM's collection code and collection time to the permit issuer 700. On receipt of the update message, the permit issuer 700 renews the RMP with the same flags 202, expiry time 204, value 205 and issuer ID 207 as the original, but with a new Unique ID 203 and CRC 209. In a preferred embodiment, the Unique ID is arranged so that the first 32 bits are unique and the remainder is random. It replaces the old RMP with the new RMP in the RMP database 701, and adds the new RMP keyed by the collection code to the collection database 702. In a more preferred embodiment, other fields of the RMP may be modified according to the PIA's policy.

In order to update the RMP caches 705, 708 of all the permit checkers 704, 707, the permit issuer 700 broadcasts an update message to all permit checkers, quoting both the old and the new RMP. Each permit issuer deletes the old RMP from its own memory cache and inserts the new one. In an alternate embodiment, only the old RMP is quoted and deleted, and the new one is inserted upon collection. In a further alternate embodiment, only the old RMP is quoted and deleted, and the new one is inserted by a further message at another time.

On receipt of a request for collection as at 414, Fig. 4, the permit checker 704, 707 passes it directly to the permit issuer 700. The permit issuer 700 looks up the collection code in collection database 702, and, if found, deletes the record from the collection database 702, and returns the relevant renewed RMP which the permit checker 704, 707 then returns to the requesting PM 107. If distributed systems and/or non-reliable protocols (e.g. UDP) are used, this process will require mechanisms to assure consistency and reliability of the transactions such as are well known in the art.

In a preferred embodiment, the permit issuer 700 may manage the collection times being issued by the permit checkers 704, 707 in order to control its own workload, based on the suggested collection time and the time the collection is successfully completed.

In the foregoing, a given RMP may be reused many times before it is eventually expired. In order to maintain the 'float' of RMPs within the system as a whole, users will need occasionally to purchase new RMPs from an issuing PIA 109.

In an exemplary embodiment of the present invention, RMPs may be purchased by the user using a Web browser to connect to Web interface 709, providing a standard Web-based e-commerce interface such as is well known in the art. As a result of a purchase with credit-card or other method of payment, Web interface 709 requests permit issuer 700 to create a number of new RMPs with specified flags 202, value 205 and expiry time 204 as when renewing an old one.

In an alternative embodiment, RMPs may be purchased in bulk through a web-services interface such as SOAP provided by Web interface 709.

In a preferred embodiment, the collection codes for the RMP creation are invented by the Web interface 709, and communicated back to the user's PM 107 through a machine-readable update e-mail. The user's PM 107 then collects the RMPs as at 414, Fig 4. In an alternate preferred embodiment, the Web interface 709 collects the RMPs itself, and the entire RMPs are communicated directly back to the user's PM 107 through an automatic e-mail. In the more preferred embodiment in which such messages are encrypted, a prior e-mail exchange will be required to exchange public keys. Such e-mail exchange may be initiated through a 'mailto:' Web link presented at the end of the purchase process. The exact form of the 'mailto:' may include identifying data for the transaction.

The issuing PIA may also choose to offer redemption of RMPs for all or some of their purchase value. In this case, the RMP will have the 'Redeemable' flag 211 set. RMPs with this flag set may be sent by PM 107 to the PIA 109 as for verification, but with the request that instead of renewing them they are redeemed for value paid to the user's account in an accounting system (not shown). The Web interface 709 may be used to manage the account and pay in and withdraw funds as is well known in the art.

In a large-scale scenario where PMs are widely deployed, it is likely that each PM user will have an account with only one out of a number of RMP-issuing PIAs. In such a case it is possible that an RMP received by a recipient may have been issued, and must therefore be redeemed, by a PIA other than the one with which the recipient has a direct accounting relationship. In a preferred embodiment, therefore, there is an inter-PIA payment clearing system (not shown) which enables payments redeemed at one PIA to be resolved to credits in an account held by another. Such systems for clearance or resolution of payments or charges between providers are well known in fields such as banking and telephony. In the preferred embodiment therefore, the request to redeem an RMP, if not to the PM's 'home' PIA, includes a reference to the home PIA and user's account to enable the clearance of some or all of the redeemed value to the user's account in the home PIA.

In an alternative preferred embodiment (not shown), the user does not require an account with any particular PIA, but can redeem RMPs through an RMP clearing service which accepts RMPs from a number of PIAs and handles the process of redeeming them by proxy on behalf of the user, then makes an aggregated payment or delivers goods or services to the user for the total redeemed value, minus a service charge. Payments from PIAs to the RMP clearing service are handled on a periodic aggregated basis. The communication between PIAs and an RMP clearing service may be through Web services such as is well known in the art.

In an alternative embodiment, all communication between the user and the PM and PIA is performed by e-mail. In a further preferred embodiment, the PM has its own user interface for management of RMPs which communicates directly with the PIA. In a still further preferred embodiment, web services or other distributed systems technologies are used to manage purchase and redemption of RMPs. Further methods of arranging the purchase and redemption of RMPs will be obvious to those skilled in the art.

In a preferred embodiment of the present invention, new users of the system are issued with a small number of free RMPs, to encourage them to use the service. These free RMPs will not be redeemable 211, and are likely to have a short expiry time 204, to avoid flooding the system with free RMPs. Ideally, free RMPs will expire at the same rate as they are issued. To avoid misuse, the number of free RMPs issued to any single person or entity will be limited.

One of the major hurdles in deploying a stamp-based spam-control service such as is described in the present invention is in handling senders who have not, will not, or cannot, install the software (PM) to attach a 'stamp' (RMP). It has been shown in Fig. 6 how a sender who does not initially have a PM 108 installed may be directed how to obtain one and allow the free flow of their original and subsequent e-mail. In some circumstances, however a recipient may wish to allow free passage of e-mail without attached RMPs from senders who they believe will not or cannot install PM technology.

Accordingly, in a preferred embodiment of the present invention, a 'White-list' of senders (not shown) is stored at PM 107. E-mail from senders on the White-list is allowed through even if no RMP is attached. Senders may be added to the White-list manually, or, at the user's option, as a result of any outgoing e-mail to them, or presence in the user's address book.

In order to allow communication from non-PM-enabled senders who are not in the White-list, the challenge process 603, 604 Fig. 6 is adapted to provide for an alternative, human response to the challenge rather than forcing the installation of a PM 108. In a preferred embodiment, the challenge requires the completion of a 'captcha' task that only a human can easily perform. In a still more preferred embodiment, the challenge asks the sender briefly to indicate the reason for the e-mail in the response, and the receiving PM 107 batches these up in a list of requests periodically presented to the receiving user for their authorisation or denial. In either case, if the sender successfully completes the challenge they are added to the White-list and their pending e-mail delivered as at 609.

With the addition of a White-list as described, the use of RMPs is only required for previously unknown senders who wish to avoid the challenge process, such as individuals who send out a lot of 'first-contact' e-mail, and organisations sending small-volume marketing material. However, in the long term the White-list process is open to attack by spammers in a number of ways:
1) Automatic response to captcha challenge - it has been known for attackers to grab the captcha problem, present it to real users in a different context (e.g. for entry to an 'adult' website) and use the answer in response to the original challenge.
2) Automatic response to human challenge - spammers may be able to forge legitimate-looking reasons for communication based on (e.g.) website contents.
3) Forged sender addresses using likely known senders - spammers, may pretend to be well-known e-commerce services, or correlate addresses within the same domain.

The White-list option is therefore likely to be of most use early in the deployment while PM-enabled clients are relatively uncommon and spammers have not yet caught up.

In the foregoing, it has been assumed that the user will install PM software 107 on their local e-mail client. This has the advantage of:
1) Retention of existing e-mail addresses
2) Retention of privacy of communication
3) Distribution of delivery avoiding a central bottleneck

However, many users already choose to use semi-centralised 'Webmail' services such as Yahoo! Mail and Google Mail. In this case, in an alternative embodiment of the present invention, the PM functionality may be more efficiently installed as part of the central service. The operation of the PM is identical, except that its interface to the receiving and sending e-mail clients 101, 102 will be internal to the Webmail service, and all communication with the user will take place through the service's normal Web interface.

Similarly, any organisation with an automated e-mail sending system, such as mailing lists and e-commerce operations, may wish to include the functionality of the sending PM 108 in their e-mail sending systems. They may either purchase RMPs from the PIA as would a normal user, or rely on receivers automatically returning RMPs as previously disclosed. The latter option is likely to be essential for voluntary-operated mailing lists.

As has already been noted, certain automated e-mail senders may nonetheless be legitimate, such as mailing lists, service updates and order acknowledgements from e-commerce operations. If the automated sender will not or cannot install PM functionality, and the recipient has not placed them on a White-list, then there is no way of their e-mail being delivered. In a preferred embodiment of the present invention, the PIA provides a mechanism of generation of temporary e-mail addresses which are leased by the user and through which e-mail can be received without requiring an RMP to be attached. The user can then use one of these temporary e-mail addresses when subscribing to mailing lists, ordering goods etc.

In a further preferred embodiment, lease of a temporary e-mail address requires a purchase by means of submitting RMPs of a given value to the PIA. In an alternative preferred embodiment, each e-mail received on the temporary e-mail address requires payment of an RMP by the receiver.

In a still further preferred embodiment, the temporary e-mail address is automatically deleted as soon as one or a small number of e-mails are received on it, or after a short user-configurable period. In an alternative preferred embodiment, the same benefit is gained by including a sender's e-mail address on the White-list only until one or a small number of e-mails is received from them, or for a short user-configurable period.

While the present invention has been described herein through exemplary embodiments, it will be understood that many modifications may be made by those skilled in the art without departing from the scope of the invention.

## Claims

1. A method for regulating the reception of e-mail by an e-mail client acting for a recipient, the method comprising the steps of:
a) receiving a first e-mail from an e-mail server by the e-mail client;
b) checking for the presence of a reusable mail permit attached to said first e-mail;
c) performing a first action on said first e-mail if no reusable mail permit is attached thereto;
d) otherwise requesting verification of said reusable mail permit from a reusable mail permit issuing service;
e) performing a second action on the first e-mail if said reusable mail permit issuing service refuses to verify said reusable mail permit;
f) otherwise delivering said first e-mail to the recipient;
g) requesting renewal of said reusable mail permit of the delivered e-mail from said reusable mail permit issuing service; and
h) storing the renewed reusable mail permit for attachment to a subsequent outgoing e-mail.

2. A method as claimed in claim 1, comprising responding to said first e-mail with an outgoing e-mail having an attached reusable mail permit.

3. A method as claimed in claim 1, wherein the e-mail client acts as a proxy for a further e-mail client, and delivering the first e-mail comprises forwarding the first e-mail to the further e-mail client.

4. A method as claimed in claim 1, wherein if no reusable mail permit is attached to said first e-mail, the first e-mail is still delivered to the recipient if the sender of the first e-mail is on a list of predefined acceptable senders.

5. A method as claimed in claim 1, wherein one or both of the first action and the second action include deleting the first e-mail.

6. A method as claimed in claim 1, wherein one or both of the first action and the second action include returning a second e-mail to the sender of the first e-mail.

7. A method as claimed in claim 6, wherein the second e-mail comprises information which may be used by the sender of the first e-mail to determine an action to be performed before resending the first e-mail.

8. A method as claimed in claim 6, wherein one or both of the first action and the second action further comprise the steps of:
a) holding the first e-mail in a pending queue;
b) returning the second e-mail;
c) on receipt of a satisfactory response to the second e-mail, delivering the held first e-mail to the recipient; and
d) on receipt of an unsatisfactory response to the second e-mail, or no response with a given time period, deleting the held first e-mail.

9. A method as claimed in claim 6, wherein the second e-mail requests the sender to send a valid reusable mail permit.

10. A method as claimed in claim 6, wherein the second e-mail includes instructions on how to obtain the ability to attach reusable mail permits.

11. A method as claimed in claim 6, wherein the step of returning a second e-mail to the sender of the first e-mail further includes the steps of:
a) Forming a signature of the first e-mail;
b) Sending at least the signature and requesting a suggested action from a response management service; and
c) Acting according to the suggested action.

12. A method as claimed in claim 11, wherein the suggested action includes one or more of:
a) Deleting the first e-mail immediately without responding with a second e-mail;
b) Delivering the first e-mail immediately without responding with a second e-mail;
c) Responding with a second e-mail immediately;
d) Sending a more detailed signature to the response management service and requesting a further suggested action;
e) Sending the entire first e-mail to the response management service and requesting a further suggested action;
f) Waiting for a given period of time and repeating the request; or
g) Waiting until a given absolute time and repeating the request.

13. A method as claimed in claim 1, wherein checking for the presence of a reusable mail permit further includes a step of checking for prima facie acceptability of the reusable mail permit if present.

14. A method as claimed in claim 13, wherein checking for prima facie acceptability of the reusable mail permit comprises verifying a CRC or other redundant information of the reusable mail permit.

15. A method as claimed in claim 1, wherein the steps of requesting verification of the reusable mail permit and requesting renewal of the reusable mail permit are combined in a single request to the reusable mail permit issuing service.

16. A method as claimed in claim 1, wherein the steps of requesting verification of the reusable mail permit and requesting renewal of the reusable mail permit are correlated by a unique collection code created by the e-mail client and supplied with the verification request to the reusable mail permit issuing service.

17. A method as claimed in claim 16, wherein the collection code includes a number chosen at random by the e-mail client.

18. A method as claimed in claim 16, wherein the collection code includes part or all of a unique identifier of the reusable mail permit being verified, or of any other reusable mail permit issued by the same reusable mail permit issuing service and held by the e-mail client.

19. A method as claimed in claim 16, wherein the result of the validation request further includes an earliest time for the renewal request, and the e-mail client waits until at least the earliest time before requesting renewal of the reusable mail permit.

20. A method as claimed in Claim 16, wherein the result of a validation request Further includes a redirection to a new address of the same or a different reusable mail permit issuing service.

21. A method as claimed in claim 1, wherein the reusable mail permit includes at least a unique identifier issued by the reusable mail permit issuing service, and the verification of the reusable mail permit by the reusable mail permit issuing service comprises at least verifying that the unique identifier has been issued and not previously verified, and the renewal of the reusable mail permit by the reusable mail permit issuing service comprises at least the generation and issuing of a new unique identifier which is at least returned to the e-mail client and stored as part of the renewed reusable mail permit by the e-mail client.

22. A method as claimed in claim 21, wherein the unique identifier is a large number.

23. A method as claimed in claim 1, wherein the reusable mail permit includes information identifying the one of a number of reusable mail permit issuing services at which the present reusable mail permit may be validated and renewed.

24. A method as claimed in claim 23, wherein the e-mail client maintains a list of acceptable reusable mail permit issuing services and rejects e-mails with reusable mail permits attached from reusable mail permit issuing services that are not on the list.

25. A method as claimed in claim 1, wherein the reusable mail permit includes an expiry date after which the permit may no longer be validated or renewed.

26. A method as claimed in claim 25, wherein the step of checking for the presence of a reusable mail permit on the incoming e-mail includes the step of comparing the expiry date of the reusable mail permit to a current date, and responding to the sender with a request for another permit if the current date is after the expiry date.

27. A method as claimed in claim 1, wherein the reusable mail permit includes a representation of a variable value.

28. A method as claimed in claim 27, wherein the step of checking for the presence of a reusable mail permit on the incoming e-mail includes the step of comparing the variable value of the reusable mail permit to a user-configurable minimum value, and responding to the sender with a request for additional value if the minimum is not met.

29. A method as claimed in claim 27, wherein the variable value is a cash value.

30. A method as claimed in claim 29, further comprising the step of redeeming the reusable mail permit for some or all of its cash value or products or services to an equivalent value at the reusable mail permit issuing service.

31. A method as claimed in Claim 30, wherein the reusable mail permit includes information identifying the one of a number of reusable mail permit issuing services at which the present reusable mail permit may be validated and renewed, and wherein the step of redeeming the reusable mail permit further comprises the steps of delivering one or more reusable mail permits to a reusable mail permit clearing service, redeeming the reusable mail permits by proxy at their respective reusable mail permit issuing services, and aggregating the value thus obtained for remission in cash, goods or services to the user.

32. A system for regulating the transmission of e-mail by a sender to a recipient and the reception of the e-mail by the recipient, the system comprising:
a) First sending means arranged to accept an outgoing e-mail from the sender;
b) Second sending means arranged to send the outgoing e-mail onwards to a remote destination;
c) First receiving means arranged to accept an incoming e-mail from a remote source;
d) Second receiving means arranged to deliver the incoming e-mail onwards to the recipient;
e) Permit storage means arranged to store at least one reusable mail permit;
f) Attachment means arranged to attach at least one reusable mail permit fetched from the permit storage means to the outgoing e-mail accepted at the first sending means before sending on the second sending means; and
g) Extraction means arranged to extract and verify at least one reusable mail permit from an incoming e-mail accepted at the first receiving means before delivering on the second receiving means and storing the extracted reusable mail permit in the permit storage means
wherein the extraction means further comprises:
h) Interface means arranged to interface to an at least one reusable mail permit issuing service;
i) Verification means arranged to verify the validity of the reusable mail permit with a reusable mail permit issuing service; and
j) Collection means arranged to collect a renewed reusable mail permit from the reusable mail permit issuing service for storage in the permit storage means
and wherein the system further comprises rejection means arranged to reject incoming e-mails where no acceptable reusable mail permit is attached and wherein the system is arranged such that the reusable mail permit is renewed if verified by the reusable mail permit issuing service.

33. A system as claimed in claim 32, further comprising collection code generating means arranged to generate a unique collection code to correlate the actions of the verification means and the collection means.

34. A system as claimed in claim 32, further comprising delay means arranged to delay operation of the collection means as a result of information returned to the verification means.

35. A system as claimed in claim 32, further comprising redirection means arranged to redirect the verification request to a new address of the same or a different reusable mail permit issuing service.

36. A system as claimed in claim 32, further comprising returning means arranged to automatically return an e-mail with a reusable mail permit attached in response to an incoming e-mail from certain predefined senders.

37. A system as claimed in claim 32, wherein said extraction means further comprises checking means arranged to check the prima facie acceptability of the reusable mail permit.

38. A system as claimed in claim 32, wherein the checking means checks one or more of:
a) A CRC or other redundant information;
b) A value;
c) An expiry date;
d) An issuer ID;
e) A type and/or version field; or
f) Flag values
of the reusable mail permit.

39. A system as claimed in claim 32, wherein the rejection means further comprises:
a) Challenge means arranged to generate and return a challenge e-mail to a sender of the incoming e-mail; and
b) Response checking means arranged to check the validity of a response to the challenge e-mail.

40. A system as claimed in claim 39, wherein the rejection means further comprises:
a) E-mail storage means arranged to store the incoming e-mail during the challenge process; and
b) Retrieval means arranged to retrieve the incoming e-mail from the e-mail storage means once the challenge has been satisfactorily responded to.

41. A system as claimed in claim 40, further comprising timeout means arranged to remove incoming e-mails from the e-mail storage means after a predefined time has elapsed since they were stored.

42. A system as claimed in claim 39, wherein the challenge e-mail includes instructions on how to install software enabling the attachment of reusable mail perm its.

43. A system as claimed in claim 39, wherein the challenge e-mail requests a reason for accepting the incoming e-mail, and the response checking means further comprises verification means arranged to present the reason to the recipient and obtaining an authorisation to proceed from the recipient.

44. A system as claimed in claim 39, wherein the challenge means further comprises advice-seeking means arranged to seek advice from a response management service before returning the challenge e-mail.

45. A system as claimed in claim 44, wherein the advice-seeking means comprises signature-generating means arranged to generate an at least one coded signature of the incoming e-mail for submission to the response management service.

46. A system as claimed in claim 44, wherein the advice-seeking means further comprises means arranged to perform an action upon the incoming e-mail, the action including one or more of:
a) Deleting the incoming e-mail;
b) Delivering the incoming e-mail to the recipient;
c) Challenging the incoming e-mail;
d) Sending further information about the e-mail to the response management service; or
e) Delaying for a time before resubmitting the incoming e-mail to the response management service.

47. A system as claimed in claim 32, further comprising purchasing means arranged to purchase new reusable mail permits from a reusable mail permit issuing service.

48. A system as claimed in claim 32, wherein the reusable mail permit includes a field indicating a value and further comprising redemption means arranged to redeem reusable mail permits for cash value or equivalent products or services at the reusable mail permit issuing service.

49. A system as claimed in Claim 48, in which the reusable mail permit includes a field indicating the one of a plurality of reusable mail permit issuing services which originally issued the reusable mail permit.

50. A system as claimed in Claim 49, further comprising clearance means to transfer redemption payments between the original issuer of a reusable mail permit and an account held at another reusable mail permit service by the recipient.

51. A system as claimed in Claim 49, further comprising central acceptance means to accept reusable mail permits issued by a plurality of reusable mail permit issuing services, proxy means to redeem reusable mail permits on behalf of a user, and aggregation means to pay an aggregated amount to the user, or deliver goods or services to equivalent value.

52. A system for regulating the reception of an e-mail by a recipient, the system comprising:
a) First receiving means arranged to accept an incoming e-mail from a remote source;
b) Second receiving means arranged to deliver the incoming e-mail onwards to the recipient;
c) Permit storage means arranged to store at least one reusable mail permit; and
d) Extraction means arranged to extract and verify at least one reusable mail permit from an incoming e-mail accepted at the first receiving means before delivering on the second receiving means and storing the extracted reusable mail permit in the permit storage means
wherein the extraction means further comprises:
e) Interface means arranged to interface to an at least one reusable mail permit issuing service;
f) Verification means arranged to verify the validity of the reusable mail permit with a reusable mail permit issuing service; and
g) Collection means arranged to collect a renewed reusable mail permit from the reusable mail permit issuing service for storage in the permit storage means,
and wherein the system further comprises rejection means arranged to reject incoming e-mails where no acceptable reusable mail permit is attached and wherein the system is arranged such that the reusable mail permit is renewed if verified by the reusable mail permit issuing service.

53. A system as claimed in claim 52, further comprising collection code generating means arranged to generate a unique collection code to correlate the actions of the verification means and the collection means.

54. A system as claimed in claim 52 further comprising delay means arranged to delay operation of the collection means as a result of information returned to the verification means.

55. A system as claimed in claim 52, further comprising returning means arranged to automatically return an e-mail with a reusable mail permit attached in response to an incoming e-mail from certain predefined senders.

56. A system as claimed in claim 52, wherein said extraction means further comprises checking means arranged to check the prima facie acceptability of the reusable mail permit.

57. A system as claimed in claim 56, wherein the checking means checks one or more of:
a) A CRC or other redundant information;
b) A value;
c) An expiry date;
d) An issuer ID;
e) A type and/or version field; or
f) Flag values
of the reusable mail permit.

58. A system as claimed in claim 52, wherein the rejection means further comprises:
a) Challenge means arranged to generate and return a challenge e-mail to a sender of the incoming e-mail; and
b) Response checking means arranged to check the validity of a response to the challenge e-mail.

59. A system as claimed in claim 52, wherein the rejection means further comprises:
a) E-mail storage means arranged to store the incoming e-mail during the challenge process; and
b) Retrieval means arranged to retrieve the incoming e-mail from the e-mail storage means once the challenge has been satisfactorily responded to.

60. A system as claimed in claim 59, further comprising timeout means arranged to remove incoming e-mails from the e-mail storage means after a predefined time has elapsed since they were stored.

61. A system as claimed in claim 58, wherein the challenge e-mail includes instructions on how to install software enabling the attachment of reusable mail permits.

62. A system as claimed in claim 59, wherein the challenge e-mail requests a reason for accepting the incoming e-mail, and the response checking means further comprises verification means arranged to present the reason to the recipient and obtaining an authorisation to proceed from the recipient.

63. A system as claimed in claim 59, wherein the challenge means further comprises advice-seeking means arranged to seek advice from a response management service before returning the challenge e-mail.

64. A system as claimed in claim 63, wherein the advice-seeking means comprises signature-generating means arranged to generate an at least one coded signature of the incoming e-mail for submission to the response management service.

65. A system as claimed in claim 63, wherein the advice-seeking means further comprises means arranged to perform an action upon the incoming e-mail, the action including one or more of:
a) Deleting the incoming e-mail;
b) Delivering the incoming e-mail to the recipient;
c) Challenging the incoming e-mail;
d) Sending further information about the e-mail to the response management service; or
e) Delaying for a time before resubmitting the incoming e-mail to the response management service.

66. A system as claimed in claim 52, further comprising purchasing means arranged to purchase new reusable mail permits from a reusable mail permit issuing service.

67. A system as claimed in claim 52, wherein the reusable mail permit includes a field indicating a value and further comprising redemption means arranged to redeem reusable mail permits for cash value or equivalent products or services at the reusable mail permit issuing service.

68. A system as claimed in claim 32, comprising determining means arranged to determine whether the recipient is able to make use of a reusable mail permit, the attachment means only being arranged to attach said reusable mail permit to the outgoing e-mail if the recipient is able to make use of a reusable mail permit.

69. A system as claimed in claim 68, in which said determining means is also arranged to determine the value of the reusable mail permit that needs to be attached for reception of the e-mail by the recipient.

70. A system as claimed in claim 69, arranged to notify the sender of the e-mail if no reusable mail permit of sufficient value is available for attachment to the e-mail.

71. A system as claimed in claim 32, arranged to notify the sender of the e-mail if no reusable mail permit is available for attachment to the e-mail.

72. A system as claimed in claim 68, arranged to store said e-mail if it is not determined that the recipient is able to make use of a reusable mail permit, the second sending means then being arranged to attach data identifying the sender as being able to attach reusable mail permits

73. A system as claimed in claim 72, comprising receiving means arranged to receive a challenge e-mail response from the recipient and to act on the stored e-mail according to the challenge e-mail response.

74. A system as claimed in claim 73 wherein the said receiving means is arranged to act by deleting the stored e-mail.

75. A system as claimed in claim 73, in which the receiving means is arranged to act by interpreting the challenge e-mail response to discover the value of reusable mail permit required by the recipient, and resending the stored e-mail to the recipient attaching sufficient reusable mail permits to meet said requirement.

76. A system as claimed in claim 75, in which the receiving means is arranged to act by noting the reusable mail permit capability of the recipient and the value of reusable mail permit required by the recipient in the determining means for use in future e-mails to the recipient.

77. A system for regulating e-mail communications between a sender and a recipient, the system comprising means at a sender for applying a reusable mail permit to an outgoing e-mail to a recipient, the recipient being arranged to block received e-mails which do not comprise a reusable mail permit and to extract said reusable mail permits from received e-mails which do comprise a reusable mail permit, said extracted reusable mail permit being renewed if verified by a reusable mail permit issuing authority and stored for subsequent application to outgoing e-mails sent by the recipient to other recipients.

78. A system as claimed in claim 77, in which the recipient is arranged to check the value of received reusable mail permits and to block received e-mails which do not comprise a reusable mail permit of sufficient value.

79. A system as claimed in claim 77, in which the recipient is arranged to respond to the sender with a further e-mail comprising a reusable mail permit for subsequent application to outgoing e-mails sent by the sender to the recipient or other recipients.

80. A system as claimed in claim 77, in which the sender is able to purchase further reusable mail permits from a reusable mail permit issuing service.

81. A system as claimed in claim 77, comprising remote validation means arranged to remotely validate permits received by recipients, each recipient comprising blocking means arranged to block e-mails comprising reusable mail permits which have not been validated by said remote validation means.

82. A computer software program for regulating the transmission of e-mail from a sender to a recipient and the reception of e-mail by the recipient, the program being arranged to attach a reusable mail permit to an outgoing e-mail from the sender to the recipient, the software further being arranged to block received e-mails from other senders which do not comprise a reusable mail permit, the recipient being able to extract reusable mail permits from received e-mails and to store reusable mail permits for subsequent attachment to outgoing e-mails sent by the recipient to other recipients.

## Patentansprüche

1. Verfahren zum Regeln des Empfangs einer Email durch einen Email-Client, der für einen Empfänger handelt, wobei das Verfahren die folgenden Schritte umfaßt:
a) Empfangen einer ersten Email von einem Email-Server durch den Email-Client;
b) Prüfen der Anwesenheit einer an die erste Email angehängten wiederverwendbaren Mailgenehmigung;
c) Ausführen einer ersten Aktion an der ersten Email, wenn keine wiederverwendbare Mailgenehmigung daran angehängt ist;
d) ansonsten Anfordern einer Verifikation der wiederverwendbaren Mailgenehmigung von einem Wiederverwendbare-Mailgenehmigung-Ausgabedienst;
e) Ausführen einer zweiten Aktion an der ersten Email, wenn der Wiederverwendbare-Mailgenehmigung-Ausgabedienst sich weigert, die wiederverwendbare Mailgenehmigung zu verifizieren;
f) ansonsten Liefern der ersten Email an den Empfänger;
g) Anfordern einer Erneuerung der wiederverwendbaren Mailgenehmigung der zugestellten Email von dem Wiederverwendbare-Mailgenehmigung-Erteilungsdienst und
h) Speichern der erneuerten wiederverwendbaren Mailgenehmigung zum Anhängen an eine nachfolgende abgehende Email.

2. Verfahren nach Anspruch 1, umfassend Antworten auf die erste Email mit einer abgehenden Email mit einer angehängten wiederverwendbaren Mailgenehmigung.

3. Verfahren nach Anspruch 1, wobei der Email-Client als ein Proxy für einen weiteren Email-Client handelt und das Zustellen der ersten Email das Weiterleiten der ersten Email an den weiteren Email-Client umfaßt.

4. Verfahren nach Anspruch 1, wobei, wenn an die erste Email keine wiederverwendbare Mailgenehmigung angehängt ist, die erste Email doch dem Empfänger zugestellt wird, wenn der Sender der ersten Email auf eine Liste vordefinierter akzeptabler Sender steht.

5. Verfahren nach Anspruch 1, wobei eine oder beide der ersten Aktion und der zweiten Aktion das Löschen der ersten Email beinhalten.

6. Verfahren nach Anspruch 1, wobei eine oder beide der ersten Aktion und der zweiten Aktion das Zurückschicken einer zweiten Email an den Sender der ersten Email beinhalten.

7. Verfahren nach Anspruch 6, wobei die zweite Email Informationen umfaßt, die von dem Sender der ersten Email verwendet werden können, um eine Aktion zu bestimmen, die ausgeführt werden soll, bevor die erste Email wieder gesendet wird.

8. Verfahren nach Anspruch 6, wobei eine oder beide der ersten Aktion und der zweiten Aktion weiterhin die folgenden Schritte umfassen:
a) Halten der ersten Email in einer Warteschlange;
b) Zurückschicken der zweiten Email;
c) Liefern der gehaltenen ersten Email an den Empfänger bei Empfang einer zufriedenstellenden Antwort auf die zweite Email und
d) Löschen der gehaltenen ersten Email bei Empfang einer unzufriedenstellenden Antwort auf die zweite Email oder keiner Antwort innerhalb einer gegebenen Zeitperiode.

9. Verfahren nach Anspruch 6, wobei die zweite Email den Sender auffordert, eine gültige wiederverwendbare Mailgenehmigung zu senden.

10. Verfahren nach Anspruch 6, wobei die zweite Email Anweisungen beinhaltet, wie die Fähigkeit erhalten wird, wiederverwendbare Mailgenehmigungen anzuhängen.

11. Verfahren nach Anspruch 6, wobei der Schritt des Zurückschickens einer zweiten Email an den Sender der ersten Email weiterhin die folgenden Schritte beinhaltet:
a) Ausbilden einer Signatur der ersten Email;
b) Senden mindestens der Signatur und Anfordern einer vorgeschlagenen Aktion von einem Antwortmanagementdienst und
c) Handeln gemäß der vorgeschlagenen Aktion.

12. Verfahren nach Anspruch 11, wobei die vorgeschlagene Aktion eine oder mehrere der folgenden beinhaltet:
a) sofortiges Löschen der ersten Email ohne Antworten mit einer zweiten Email;
b) sofortiges Zustellen der ersten Email ohne Antworten mit einer zweiten Email;
c) sofortiges Antworten mit einer zweiten Email;
d) Senden einer detaillierteren Signatur an den Antwortmanagementdienst und Anfordern einer weiteren vorgeschlagenen Aktion;
e) Senden der ganzen ersten Email an den Antwortmanagementdienst und Anfordern einer weiteren vorgeschlagenen Aktion;
f) Warten für eine gegebene Zeitperiode und Wiederholen der Anforderung oder
g) Warten bis zu einer gegebenen absoluten Zeit und Wiederholen der Anforderung.

13. Verfahren nach Anspruch 1, wobei das Prüfen hinsichtlich der Anwesenheit einer wiederverwendbaren Mailgenehmigung weiterhin einen Schritt des Prüfens auf eine Anscheinsakzeptabilität der wiederverwendbaren Mailgenehmigung, falls anwesend, beinhaltet.

14. Verfahren nach Anspruch 13, wobei das Prüfen auf eine Anscheinsakzeptabilität der wiederverwendbaren Mailgenehmigung das Verifizieren von CRC- oder anderen redundanten Informationen der wiederverwendbaren Mailgenehmigung umfaßt.

15. Verfahren nach Anspruch 1, wobei die Schritte des Anforderns einer Verifikation der wiederverwendbaren Mailgenehmigung und des Anforderns einer Erneuerung der wiederverwendbaren Mailgenehmigung zu einer einzelnen Anforderung an den Wiederverwendbare-Mailgenehmigung-Erteilungsdienst kombiniert werden.

16. Verfahren nach Anspruch 1, wobei die Schritte des Anforderns einer Verifikation der wiederverwendbaren Mailgenehmigung und des Anforderns einer Erneuerung der wiederverwendbaren Mailgenehmigung durch einen eindeutigen Sammlungscode korreliert werden, der von dem Email-Client erzeugt und mit der Verifikationsanforderung an den Wiederverwendbare-Mailgenehmigung-Erteilungsdienst geliefert wird.

17. Verfahren nach Anspruch 16, wobei der Sammlungscode eine durch den Email-Client zufällig gewählte Zahl enthält.

18. Verfahren nach Anspruch 16, wobei der Sammlungscode ganz oder teilweise eine eindeutige Identifizierung der wiederverwendbaren Mailgenehmigung, die verifiziert wird, oder von irgendeiner anderen wiederverwendbaren Mailgenehmigung, die von dem gleichen Wiederverwendbare-Mailgenehmigung-Erteilungsdienst erteilt und von dem Email-Client gehalten wird, enthält.

19. Verfahren nach Anspruch 16, wobei das Ergebnis der Validierungsanforderung weiterhin eine früheste Zeit für die Erneuerungsanforderung enthält und der Email-Client mindestens bis zu der frühesten Zeit wartet, bevor er eine Erneuerung der wiederverwendbaren Mailgenehmigung anfordert.

20. Verfahren nach Anspruch 16, wobei das Ergebnis einer Validierungsanforderung weiterhin eine Umleitung zu einer neuen Adresse des gleichen oder eines anderen Wiederverwendbare-Mailgenehmigung-Erteilungsdienstes enthält.

21. Verfahren nach Anspruch 1, wobei die wiederverwendbare Mailgenehmigung mindestens eine von der Wiederverwendbare-Mailgenehmigung-Erteilungsdienst erteilte eindeutige Identifizierung enthält, und die Verifikation der wiederverwendbaren Mailgenehmigung durch den Wiederverwendbare-Mailgenehmigung-Erteilungsdienst mindestens das Verifizieren umfaßt, das die eindeutige Identifizierung erteilt und nicht zuvor verifiziert wurde, und das Erneuern der wiederverwendbaren Mailgenehmigung durch den Wiederverwendbare-Mailgenehmigung-Erteilungsdienst mindestens die Erzeugung und die Erteilung einer neuen eindeutigen Identifizierung umfaßt, die mindestens zu dem Email-Client zurückgeschickt und als Teil der erneuerten wiederverwendbaren Mailgenehmigung durch den Email-Client gespeichert wird.

22. Verfahren nach Anspruch 21, wobei die eindeutige Identifizierung eine große Zahl ist.

23. Verfahren nach Anspruch 1, wobei die wiederverwendbare Mailgenehmigung Informationen enthält, die die eine einer Reihe von Wiederverwendbare-Mailgenehmigung-Erteilungsdiensten identifiziert, bei denen die vorliegende wiederverwendbare Mailgenehmigung validiert und erneuert werden kann.

24. Verfahren nach Anspruch 23, wobei der Email-Client eine Liste von akzeptablen Wiederverwendbare-Mailgenehmigung-Erteilungsdiensten pflegt und Emails mit wiederverwendbaren Mailgenehmigungen zurückweist, die von Wiederverwendbare-Mailgenehmigung-Erteilungsdiensten angehängt worden sind, die nicht auf der Liste stehen.

25. Verfahren nach Anspruch 1, wobei die wiederverwendbare Mailgenehmigung ein Ablaufdatum enthält, nach dem die Genehmigung nicht länger validiert oder erneuert werden darf.

26. Verfahren nach Anspruch 25, wobei der Schritt des Prüfens der Anwesenheit einer wiederverwendbaren Mailgenehmigung an der ankommenden Email den Schritt beinhaltet, das Ablaufdatum der wiederverwendbaren Mailgenehmigung mit einem aktuellen Datum zu vergleichen und dem Sender mit einer Anforderung nach einer anderen Genehmigung zu antworten, wenn das aktuelle Datum nach dem Ablaufdatum liegt.

27. Verfahren nach Anspruch 1, wobei die wiederverwendbare Mailgenehmigung eine Darstellung eines variablen Werts enthält.

28. Verfahren nach Anspruch 27, wobei der Schritt des Prüfens der Anwesenheit einer wiederverwendbaren Mailgenehmigung an der ankommenden Email den Schritt beinhaltet, den variablen Wert der wiederverwendbaren Mailgenehmigung mit einem benutzerkonfigurierbaren Mindestwert zu vergleichen und dem Sender mit einer Anforderung nach einem zusätzlichen Wert zu antworten, wenn das Minimum nicht erfüllt ist.

29. Verfahren nach Anspruch 27, wobei der variable Wert ein Geldwert ist.

30. Verfahren nach Anspruch 29, weiterhin umfassend den Schritt des Einlösens der wiederverwendbaren Mailgenehmigung für einen Teil oder alles seines Geldwerts oder von Produkten oder Diensten zu einem äquivalenten Wert bei dem Wiederverwendbare-Mailgenehmigung-Erteilungsdienst.

31. Verfahren nach Anspruch 30, wobei die wiederverwendbare Mailgenehmigung Informationen enthält, die den einen einer Reihe von Wiederverwendbare-Mailgenehmigung-Erteilungsdiensten identifiziert, bei dem die vorliegende wiederverwendbare Mailgenehmigung validiert und erneuert werden darf, und wobei der Schritt des Einlösens der wiederverwendbaren Mailgenehmigung weiterhin die Schritte des Lieferns einer oder mehrerer wiederverwendbarer Mailgenehmigungen an einen Wiederverwendbare-Mailgenehmigung-Clearingdienst, das Einlösen der wiederverwendbaren Mailgenehmigungen durch einen Proxy bei ihren jeweiligen Wiederverwendbare-Mailgenehmigung-Erteilungsdiensten und das Aggregieren des so erhaltenen Werts für Nachlaß als Geldwert, Güter oder Dienste für den Benutzer umfaßt.

32. System zum Regulieren der Übertragung einer Email durch einen Sender an einen Empfänger und des Empfangs der Email durch den Empfänger, wobei das System folgendes umfaßt:
a) ein erstes Sendemittel, das ausgelegt ist, eine abgehende Email von dem Sender anzunehmen;
b) ein zweites Sendemittel, das ausgelegt ist, die abgehende Email weiter zu einem entfernten Ziel zu senden;
c) ein erstes Empfangsmittel, das ausgelegt ist, eine ankommende Email von einer entfernten Quelle anzunehmen;
d) ein zweites Empfangsmittel, das ausgelegt ist, die ankommende Email weiter an den Empfänger zu liefern;
e) ein Genehmigungsspeicherungsmittel, das ausgelegt ist, mindestens eine wiederverwendbare Mailgenehmigung zu speichern;
f) ein Anhängungsmittel, das ausgelegt ist, mindestens eine von dem Genehmigungsspeicherungsmittel geholte wiederverwendbare Mailgenehmigung an die an dem ersten Sendemittel angenommene abgehende Email anzuhängen, ohne das Senden auf dem zweiten Sendemittel; und
g) ein Extraktionsmittel, das ausgelegt ist, mindestens eine wiederverwendbare Mailgenehmigung von einer an dem ersten Empfangsmittel angenommenen ankommenden Email zu extrahieren und zu verifizieren, vor dem Liefern an das zweite Empfangsmittel und Speichern der extrahierten wiederverwendbaren Mailgenehmigung in dem Genehmigungsspeicherungsmittel,
wobei das Extraktionsmittel weiterhin folgendes umfaßt:
h) ein Schnittstellenmittel, das ausgelegt ist, an mindestens einen Wiederverwendbare-Mailgenehmigung-Erteilungsdienst zu koppeln;
i) ein Verifikationsmittel, das ausgelegt ist, die Validität der wiederverwendbaren Mailgenehmigung mit einem Wiederverwendbare-Mailgenehmigung-Erteilungsdienst zu verifizieren; und
j) ein Sammelmittel, das ausgelegt ist, eine erneuerte wiederverwendbare Mailgenehmigung von dem Wiederverwendbare-Mailgenehmigung-Erteilungsdienst abzuholen zur Speicherung in dem Genehmigungsspeicherungsmittel und wobei das System weiterhin Zurückweisungsmittel umfaßt, das ausgelegt ist, ankommende Emails zurückzuweisen, wenn keine akzeptable wiederverwendbare Mailgenehmigung angehänt ist, und wobei das System so ausgelegt ist, daß die wiederverwendbare Mailgenehmigung erneuert wird, wenn durch den Wiederverwendbare-Mailgenehmigung-Erteilungsdienst verifiziert.

33. System nach Anspruch 32, weiterhin umfassend ein Sammlungscodeerzeugungsmittel, das ausgelegt ist, einen eindeutigen Sammlungscode zu erzeugen zum Korrelieren der Aktionen des Verifikationsmittels und des Sammlungsmittels.

34. System nach Anspruch 32, weiterhin umfassend ein Verzögerungsmittel, das ausgelegt ist, eine Operation des Sammlungsmittels infolge von zu dem Verifikationsmittel zurückgeschickten Informationen zu verzögern.

35. System nach Anspruch 32, weiterhin umfassend ein Umleitungsmittel, das ausgelegt ist, die Verifikationsanforderung an eine neue Adresse des gleichen oder eines anderen Wiederverwendbare-Mailgenehmigung-Erteilungsdienstes umzuleiten.

36. System nach Anspruch 32, weiterhin umfassend ein Rücksendemittel, das ausgelegt ist, eine Email mit einer angehängten wiederverwendbaren Mailgenehmigung als Reaktion auf eine ankommende Email von bestimmten vordefinierten Sendern automatisch zurückzuschicken.

37. System nach Anspruch 32, wobei das Extraktionsmittel weiterhin ein Prüfungsmittel umfaßt, das ausgelegt ist, die Anscheinsakzeptabilität der wiederverwendbaren Mailgenehmigung zu prüfen.

38. System nach Anspruch 32, wobei das Prüfungsmittel eines oder mehrere der folgenden:
a) CRC- oder andere redundante Informationen;
b) einen Wert;
c) ein Ablaufdatum;
d) eine Aussteller-ID;
e) ein Typ- und/oder Versionsfeld oder
f) Flag-Werte
der wiederverwendbaren Mailgenehmigung prüft.

39. System nach Anspruch 32, wobei das Zurückweisungsmittel weiterhin folgendes umfaßt:
a) ein Herausforderungsmittel, das ausgelegt ist, eine Herausforderungs-Email zu erzeugen und an einen Sender der ankommenden Email zurückzuschicken; und
b) ein Antwortprüfungsmittel, das ausgelegt ist, die Validität einer Antwort auf die Herausforderungs-Email zu prüfen.

40. System nach Anspruch 39, wobei das Zurückweisungsmittel weiterhin folgendes umfaßt:
a) ein Email-Speicherungsmittel, das ausgelegt ist, die ankommende Email während des Herausforderungsprozesses zu speichern; und
b) ein Abrufmittel, das ausgelegt ist, die ankommende Email aus dem Email-Speicherungsmittel abzurufen, nachdem auf die Anforderung zufriedenstellend geantwortet worden ist.

41. System nach Anspruch 40, weiterhin umfassend ein Zeitausschaltungsmittel, das ausgelegt ist, ankommende Emails aus dem Email-Speicherungsmittel zu entfernen, nachdem eine vordefinierte Zeit verstrichen ist, seit sie gespeichert wurden.

42. System nach Anspruch 39, wobei die Herausforderungs-Email Anweisungen beinhaltet, wie Software zu installieren ist, die das Anhängen von wiederverwendbaren Mailgenehmigungen ermöglicht.

43. System nach Anspruch 39, wobei die Herausforderungs-Email einen Grund anfordert zum Annehmen der ankommenden Email und das Antwortprüfungsmittel weiterhin ein Verifikationsmittel umfaßt, das ausgelegt ist, den Grund dem Empfänger vorzulegen und eine Autorisierung zum Weiterarbeiten von dem Empfänger zu erhalten.

44. System nach Anspruch 39, wobei das Herausforderungsmittel weiterhin ein Ratsuchemittel umfaßt, das ausgelegt ist, vor dem Zurückschicken der Herausforderungs-Email Rat von einem Antwortmanagementdienst zu suchen.

45. System nach Anspruch 44, wobei das Ratsuchemittel ein Signaturerzeugungsmittel umfaßt, das ausgelegt ist, mindestens eine codierte Signatur der ankommenden Email zu erzeugen, um sie dem Antwortmanagementdienst zu unterbreiten.

46. System nach Anspruch 44, wobei das Ratsuchemittel weiterhin ein Mittel umfaßt, das ausgelegt ist, eine Aktion an der ankommenden Email durchzuführen, wobei die Aktion eine oder mehrere der folgenden enthält:
a) Löschen der ankommenden Email;
b) Liefern der ankommenden Email an den Empfänger;
c) Herausfordern der ankommenden Email;
d) Senden weiterer Informationen über die Email an den Antwortmanagementdienst oder
e) um eine Zeit Verzögern, bevor die ankommende Email wieder dem Antwortmanagementdienst unterbreitet wird.

47. System nach Anspruch 32, weiterhin umfassend ein Einkaufsmittel, das ausgelegt ist, neue wiederverwendbare Mailgenehmigungen von einem Wiederverwendbare-Mailgenehmigung-Erteilungsdienst zu kaufen.

48. System nach Anspruch 32, wobei die wiederverwendbare Mailgenehmigung ein Feld enthält, das einen Wert anzeigt, und weiterhin umfassend ein Einlösemittel, das ausgelegt ist, wiederverwendbare Mailgenehmigungen gegen einen Geldwert oder äquivalente Produkte oder Dienste bei dem Wiederverwendbare-Mailgenehmigung-Erteilungsdienst einzulösen.

49. System nach Anspruch 48, bei dem die wiederverwendbare Mailgenehmigung ein Feld enthält, das den einen von mehreren Wiederverwendbare-Mailgenehmigung-Erteilungsdiensten anzeigt, der ursprünglich die wiederverwendbare Mailgenehmigung erteilte.

50. System nach Anspruch 49, weiterhin umfassend ein Clearance-Mittel zum Übertragen von Einlösezahlungen zwischen dem ursprünglichen Aussteller einer wiederverwendbaren Mailgenehmigung und einem Konto, das der Empfänger bei einem anderen Wiederverwendbare-Mailgenehmigung-Erteilungsdienst hat.

51. System nach Anspruch 49, weiterhin umfassend ein zentrales Akzeptanzmittel zum Annehmen von von mehreren Wiederverwendbare-Mailgenehmigung-Erteilungsdiensten erteilten wiederverwendbaren Mailgenehmigungen, ein Proxy-Mittel zum Einlösen wiederverwendbarer Mailgenehmigungen im Auftrag eines Benutzers und ein Aggregationsmittel zum Zahlen einer aggregierten Menge an den Benutzer oder Liefern von Gütern oder Diensten in einem äquivalenten Wert.

52. System zum Regeln des Empfangs einer Email durch einen Empfänger, wobei das System folgendes umfaßt:
a) ein erstes Empfangsmittel, das ausgelegt ist, eine ankommende Email von einer entfernten Quelle anzunehmen;
b) ein zweites Empfangsmittel, das ausgelegt ist, die ankommende Email weiter an den Empfänger zu liefern;
c) ein Genehmigungsspeicherungsmittel, das ausgelegt ist, mindestens eine wiederverwendbare Mailgenehmigung zu speichern; und
d) ein Extraktionsmittel, das ausgelegt ist, mindestens eine wiederverwendbare Mailgenehmigung von einer an dem ersten Empfangsmittel angenommenen ankommenden Email zu extrahieren und zu verifizieren, vor dem Liefern an das zweite Empfangsmittel und Speichern der extrahierten wiederverwendbaren Mailgenehmigung in dem Genehmigungsspeicherungsmittel,
wobei das Extraktionsmittel weiterhin folgendes umfaßt:
e) ein Schnittstellenmittel, das ausgelegt ist, an mindestens einen Wiederverwendbare-Mailgenehmigung-Erteilungsdienst zu koppeln;
f) ein Verifikationsmittel, das ausgelegt ist, die Validität der wiederverwendbaren Mailgenehmigung mit einem Wiederverwendbare-Mailgenehmigung-Erteilungsdienst zu verifizieren; und
g) ein Sammelmittel, das ausgelegt ist, eine erneuerte wiederverwendbare Mailgenehmigung von dem Wiederverwendbare-Mailgenehmigung-Erteilungsdienst abzuholen zur Speicherung in dem Genehmigungsspeicherungsmittel
und wobei das System weiterhin ein Zurückweisungsmittel umfaßt, das ausgelegt ist, ankommende Emails zurückzuweisen, wenn keine akzeptable wiederverwendbare Mailgenehmigung angehängt ist, und wobei das System so ausgelegt ist, daß die wiederverwendbare Mailgenehmigung erneuert wird, wenn durch den Wiederverwendbare-Mailgenehmigung-Erteilungsdienst verifiziert.

53. System nach Anspruch 52, weiterhin umfassend ein Sammlungscodeerzeugungsmittel, das ausgelegt ist, einen eindeutigen Sammlungscode zu erzeugen zum Korrelieren der Aktionen des Verifikationsmittels und des Sammlungsmittels.

54. System nach Anspruch 52, weiterhin umfassend ein Verzögerungsmittel, das ausgelegt ist, eine Operation des Sammlungsmittels infolge von zu dem Verifikationsmittel zurückgeschickten Informationen zu verzögern.

55. System nach Anspruch 52, weiterhin umfassend ein Rücksendemittel, das ausgelegt ist, eine Email mit einer angebrachten wiederverwendbaren Mailgenehmigung als Reaktion auf eine ankommende Email von bestimmten vordefinierten Sendern zurückzuschicken.

56. System nach Anspruch 52, wobei das Extraktionsmittel weiterhin ein Prüfungsmittel umfaßt, das ausgelegt ist, die Anscheinsakzeptabilität der wiederverwendbaren Mailgenehmigung zu prüfen.

57. System nach Anspruch 56, wobei das Prüfungsmittel eines oder mehrere der folgenden:
a) CRC- oder andere redundante Informationen;
b) einen Wert;
c) ein Ablaufdatum;
d) eine Aussteller-ID;
e) ein Typ- und/oder Versionsfeld oder
f) Flag-Werte
der wiederverwendbaren Mailgenehmigung prüft.

58. System nach Anspruch 52, wobei das Zurückweisungsmittel weiterhin folgendes umfaßt:
a) ein Herausforderungsmittel, das ausgelegt ist, eine Herausforderungs-Email zu erzeugen und an einen Sender der ankommenden Email zurückzuschicken; und
b) ein Antwortprüfungsmittel, das ausgelegt ist, die Validität einer Antwort auf die Herausforderungs-Email zu prüfen.

59. System nach Anspruch 52, wobei das Zurückweisungsmittel weiterhin folgendes umfaßt:
a) ein Email-Speicherungsmittel, das ausgelegt ist, die ankommende Email während des Herausforderungsprozesses zu speichern; und
b) ein Abrufmittel, das ausgelegt ist, die ankommende Email aus dem Email-Speicherungsmittel abzurufen, nachdem auf die Anforderung zufriedenstellend geantwortet worden ist.

60. System nach Anspruch 59, weiterhin umfassend ein Zeitausschaltungsmittel, das ausgelegt ist, ankommende Emails aus dem Email-Speicherungsmittel zu entfernen, nachdem eine vordefinierte Zeit verstrichen ist, seit sie gespeichert wurden.

61. System nach Anspruch 58, wobei die Herausforderungs-Email Anweisungen beinhaltet, wie Software zu installieren ist, die das Anhängen von wiederverwendbaren Mailgenehmigungen ermöglicht.

62. System nach Anspruch 59, wobei die Herausforderungs-Email einen Grund anfordert zum Annehmen der ankommenden Email und das Antwortprüfungsmittel weiterhin ein Verifikationsmittel umfaßt, das ausgelegt ist, den Grund dem Empfänger vorzulegen und eine Autorisierung zum Weiterarbeiten von dem Empfänger zu erhalten.

63. System nach Anspruch 59, wobei das Herausforderungsmittel weiterhin ein Ratsuchemittel umfaßt, das ausgelegt ist, vor dem Zurückschicken der Herausforderungs-Email Rat von einem Antwortmanagementdienst zu suchen.

64. System nach Anspruch 63, wobei das Ratsuchemittel ein Signaturerzeugungsmittel umfaßt, das ausgelegt ist, mindestens eine codierte Signatur der ankommenden Email zu erzeugen, um sie dem Antwortmanagementdienst zu unterbreiten.

65. System nach Anspruch 63, wobei das Ratsuchemittel weiterhin ein Mittel umfaßt, das ausgelegt ist, eine Aktion an der ankommenden Email durchzuführen, wobei die Aktion eine oder mehrere der folgenden enthält:
a) Löschen der ankommenden Email;
b) Liefern der ankommenden Email an den Empfänger;
c) Herausfordern der ankommenden Email;
d) Senden weiterer Informationen über die Email an den Antwortmanagementdienst oder
e) um eine Zeit Verzögern, bevor die ankommende Email wieder dem Antwortmanagementdienst unterbreitet wird.

66. System nach Anspruch 52, weiterhin umfassend ein Einkaufsmittel, das ausgelegt ist, neue wiederverwendbare Mailgenehmigungen von einem Wiederverwendbare-Mailgenehmigung-Erteilungsdienst zu kaufen.

67. System nach Anspruch 52, wobei die wiederverwendbare Mailgenehmigung ein Feld enthält, das einen Wert anzeigt, und weiterhin umfassend ein Einlösemittel, das ausgelegt ist, wiederverwendbare Mailgenehmigungen gegen einen Geldwert oder äquivalente Produkte oder Dienste bei dem Wiederverwendbare-Mailgenehmigung-Erteilungsdienst einzulösen.

68. System nach Anspruch 32, das ein Bestimmungsmittel umfaßt, das ausgelegt ist, um zu bestimmen, ob der Empfänger in der Lage ist, eine wiederverwendbare Mailgenehmigung zu verwenden, wobei das Anhängungsmittel nur ausgelegt ist, die wiederverwendbare Mailgenehmigung an die abgehende Email anzuhängen, wenn der Empfänger in der Lage ist, eine wiederverwendbare Mailgenehmigung zu nutzen.

69. System nach Anspruch 68, bei dem das Bestimmungsmittel auch ausgelegt ist, den Wert der wiederverwendbaren Mailgenehmigung zu bestimmen, die für den Empfang der Email durch den Empfänger angehängt werden muß.

70. System nach Anspruch 69, das ausgelegt ist, den Sender der Email zu benachrichtigen, wenn keine wiederverwendbare Mailgenehmigung mit ausreichendem Wert zum Anhängen an die Email verfügbar ist.

71. System nach Anspruch 32, das ausgelegt ist, den Sender der Email zu benachrichtigen, wenn keine wiederverwendbare Mailgenehmigung zum Anhängen an die Email verfügbar ist.

72. System nach Anspruch 68, das dafür ausgelegt ist, die Email zu speichern, wenn nicht bestimmt wird, daß der Empfänger in der Lage ist, eine wiederverwendbare Mailgenehmigung zu nutzen, wobei das zweite Sendemittel dann dafür ausgelegt ist, Daten anzuhängen, die den Sender so identifizieren, daß er in der Lage ist, wiederverwendbare Mailgenehmigungen anzuhängen.

73. System nach Anspruch 72, umfassend ein Empfangsmittel, das ausgelegt ist, eine Herausforderungs-Emailantwort von dem Empfänger zu empfangen und auf die gespeicherte Email hin gemäß der Herausforderungs-Emailantwort zu handeln.

74. System nach Anspruch 73, wobei das Empfangsmittel dafür ausgelegt ist, zu handeln, indem es die gespeicherte Email löscht.

75. System nach Anspruch 73, bei dem das Empfangsmittel dafür ausgelegt ist, zu handeln, indem es die Herausforderungs-Emailantwort dahingehend interpretiert, den Wert einer von dem Empfänger erforderlichen wiederverwendbaren Mailgenehmigung zu entdecken und die gespeicherte Email wieder an den Empfänger zu senden unter Anhängen ausreichender wiederverwendbarer Mailgenehmigungen, um die Anforderung zu erfüllen.

76. System nach Anspruch 75, bei dem das Empfangsmittel so ausgelegt ist, daß es handelt, indem es die Wiederverwendbare-Mailgenehmigung-Fähigkeit des Empfängers und den Wert der von dem Empfänger erforderlichen wiederverwendbaren Mailgenehmigung in dem Bestimmungsmittel zur Verwendung in zukünftigen Emails an den Empfänger feststellt.

77. System zum Regeln von Email-Kommunikationen zwischen einem Sender und einem Empfänger, wobei das System ein Mittel bei einem Sender umfaßt zum Anhängen einer wiederverwendbaren Mailgenehmigung an eine abgehende Email an einen Empfänger, wobei der Empfänger dafür ausgelegt ist, empfangene Emails zu blockieren, die keine wiederverwendbare Mailgenehmigung umfassen, und die wiederverwendbaren Mailgenehmigungen aus empfangenen Emails zu extrahieren, die eine wiederverwendbare Mailgenehmigung umfassen, wobei die extrahierte wiederverwendbare Mailgenehmigung erneuert wird bei Verifizierung durch eine Wiederverwendbare-Mailgenehmigung-Erteilungsautorität und für späteres Anhängen an durch den Empfänger an andere Empfänger gesendete abgehende Emails gespeichert wird.

78. System nach Anspruch 77, bei dem der Empfänger dafür ausgelegt ist, den Wert von empfangenen wiederverwendbaren Mailgenehmigungen zu prüfen und empfangene Emails zu blockieren, die keine wiederverwendbare Mailgenehmigung von ausreichendem Wert umfassen.

79. System nach Anspruch 77, bei dem der Empfänger dafür ausgelegt ist, dem Sender mit einer weiteren Email zu antworten, die eine wiederverwendbare Mailgenehmigung umfaßt für das spätere Anbringen an von dem Sender an den Empfänger oder andere Empfänger gesendete abgehende Emails.

80. System nach Anspruch 77, bei dem der Sender in der Lage ist, weitere wiederverwendbare Mailgenehmigungen von einem Wiederverwendbare-Mailgenehmigung-Erteilungsdienst zu kaufen.

81. System nach Anspruch 77, umfassend ein abgesetztes Validierungsmittel, das ausgelegt ist, von Empfängern empfangene Genehmigungen abgesetzt zu validieren, wobei jeder Empfänger ein Blockierungsmittel umfaßt, das ausgelegt ist, Emails zu blockieren, die wiederverwendbare Mailgenehmigungen umfassen, die von dem abgesetzten Validierungsmittel nicht validiert worden sind.

82. Computersoftwareprogramm zum Regeln der Übertragung von Emails von einem Sender zu einem Empfänger und des Empfangs von Emails durch den Empfänger, wobei das Programm dafür ausgelegt ist, eine wiederverwendbare Mailgenehmigung an eine abgehende Email von dem Sender zu dem Empfänger anzuhängen, wobei die Software weiterhin dafür ausgelegt ist, empfangene Emails von anderen Sendern zu blockieren, die keine wiederverwendbare Mailgenehmigung umfassen, wobei der Empfänger in der Lage ist, aus den empfangenen Emails wiederverwendbare Mailgenehmigungen zu extrahieren und wiederverwendbare Mailgenehmigungen für das spätere Anhängen an von dem Empfänger an andere Empfänger gesendete abgehende Emails zu speichern.

## Revendications

1. Méthode de régulation de la réception d'un courriel par un client de courriel agissant pour un destinataire, la méthode comprenant les étapes de :
a) réception par le client de courriel d'un premier courriel provenant d'un serveur de courriel ;
b) vérification de la présence d'un permis postal réutilisable attaché audit premier courriel;
c) réalisation d'une première action sur ledit premier courriel lorsqu'aucun permis postal n'est attaché à celui-ci ;
d) demande, par un autre moyen, d'une vérification dudit permis postal réutilisable provenant d'un service de délivrance de permis postaux réutilisables ;
e) réalisation d'une seconde action sur le premier courriel lorsque ledit service de délivrance de permis postaux réutilisables refuse de vérifier ledit permis postal réutilisable ;
f) remise, par un autre moyen, dudit premier courriel au destinataire ;
g) demande de renouvellement dudit permis postal réutilisable du courriel remis provenant dudit service de délivrance de permis postaux réutilisables ; et
h) stockage du permis postal réutilisable renouvelé pour un attachement à un courriel sortant ultérieur.

2. Méthode selon la revendication 1, comprenant une réponse audit premier courriel par un courriel sortant ayant un permis postal réutilisable attaché.

3. Méthode selon la revendication 1, dans laquelle le client de courriel agit en tant que proxy pour un client de courriel supplémentaire, et la remise du premier courriel comprend le transfert du premier courriel au client de courriel supplémentaire.

4. Méthode selon la revendication 1, dans laquelle, lorsqu'aucun permis postal réutilisable n'est attaché audit premier courriel, le premier courriel est toujours remis au destinataire lorsque l'émetteur du premier courriel figure sur une liste d'émetteurs acceptables prédéfinis.

5. Méthode selon la revendication 1, dans laquelle la première action, la seconde action ou les deux, inclut/incluent la suppression du premier courriel.

6. Méthode selon la revendication 1, dans laquelle la première action, la seconde action ou les deux, inclut/incluent le retour d'un second courriel à l'émetteur du premier courriel.

7. Méthode selon la revendication 6, dans laquelle le second courriel comprend des informations qui peuvent être utilisées par l'émetteur du premier courriel pour déterminer une action à effectuer avant d'envoyer de nouveau le premier courriel.

8. Méthode selon la revendication 6, dans laquelle la première action, la seconde action ou les deux comprend/comprennent en outre les étapes de :
a) rétention du premier courriel dans une file d'attente ;
b) retour du second courriel ;
c) à la réception d'une réponse satisfaisante au second courriel, remise du premier courriel retenu au destinataire ; et
d) à la réception d'une réponse non satisfaisante au second courriel, ou sans réponse pendant une durée donnée, suppression du premier courriel retenu.

9. Méthode selon la revendication 6, dans laquelle le second courriel requiert de l'émetteur d'envoyer un permis postal réutilisable valide.

10. Méthode selon la revendication 6, dans laquelle le second courriel inclut des instructions sur la manière d'obtenir la capacité d'attacher des permis postaux réutilisables.

11. Méthode selon la revendication 6, dans laquelle l'étape de retour d'un second courriel à l'émetteur du premier courriel inclut en outre les étapes de :
a) formation d'une signature du premier courriel ;
b) envoi, au moins, de la signature et demande d'une action suggérée par un service de gestion de réponses ; et
c) agissement selon l'action suggérée.

12. Méthode selon la revendication 11, dans laquelle l'action suggérée inclut l'une, ou plus, des actions suivantes :
a) suppression immédiate du premier courriel, sans réponse par un second courriel ;
b) remise immédiate du premier courriel, sans réponse par un second courriel ;
c) réponse immédiate par un second courriel ;
d) envoi d'une signature plus détaillée au service de gestion de réponses et demande d'une action suggérée supplémentaire ;
e) envoi du premier courriel complet au service de gestion de réponses et demande d'une action suggérée supplémentaire ;
f) attente pendant une durée donnée et répétition de la demande ; ou
g) attente jusqu'à un temps absolu donné et répétition de la demande.

13. Méthode selon la revendication 1, dans laquelle la vérification de la présence d'un permis postal réutilisable inclut en outre une étape de vérification du caractère acceptable à première vue du permis postal réutilisable lorsqu'il est présent.

14. Méthode selon la revendication 13, dans laquelle la vérification de l'acceptabilité à première vue du permis postal réutilisable comprend la vérification d'un CRC ou d'autres informations redondantes du permis postal réutilisable.

15. Méthode selon la revendication 1, dans laquelle les étapes de demande de vérification du permis postal réutilisable et de demande de renouvellement du permis postal réutilisable sont associées dans une seule demande au service de délivrance de permis postaux réutilisables.

16. Méthode selon la revendication 1, dans laquelle les étapes de demande de vérification du permis postal réutilisable et de demande de renouvellement du permis postal réutilisable sont corrélées par un code d'encaissement unique créé par le client de courriel et fourni avec la demande de vérification au service de délivrance de permis postaux réutilisables.

17. Méthode selon la revendication 16, dans laquelle le code d'encaissement inclut un nombre choisi au hasard par le client de courriel.

18. Méthode selon la revendication 16, dans laquelle le code d'encaissement inclut une partie ou l'ensemble d'un identifiant unique du permis postal réutilisable étant vérifié, ou de n'importe quel autre permis postal réutilisable délivré par le même service de délivrance de permis postaux réutilisables et retenu par le client de courriel.

19. Méthode selon la revendication 16, dans laquelle le résultat de la demande de validation inclut en outre un temps minimum avant une demande de renouvellement, et le client de courriel attend jusqu'à, au moins, le temps minimum avant de demander un renouvellement du permis postal réutilisable.

20. Méthode selon la revendication 16, dans laquelle le résultat d'une demande de validation inclut en outre une redirection vers une nouvelle adresse du même, ou d'un autre, service de délivrance de permis postaux réutilisables.

21. Méthode selon la revendication 1, dans laquelle le permis postal réutilisable inclut un, ou plus, identifiant unique délivré par le service de délivrance des permis postaux réutilisables, et la vérification du permis postal réutilisable par le service de délivrance de permis postaux réutilisables comprend, au moins, la vérification que l'identifiant unique a été délivré et non vérifié au préalable, et le renouvellement du permis postal réutilisable par le service de délivrance de permis postaux réutilisables comprend, au moins, la génération et la délivrance d'un nouvel identifiant unique qui est, au moins, retourné au client de courriel et stocké en tant que partie du permis postal réutilisable renouvelé par le client de courriel.

22. Méthode selon la revendication 21, dans laquelle l'identifiant unique est un nombre de grande taille.

23. Méthode selon la revendication 1, dans laquelle le permis postal réutilisable inclut des informations d'identification de l'un des nombreux services de délivrance de permis postaux réutilisables, auprès duquel le permis postal réutilisable présent peut être validé et renouvelé.

24. Méthode selon la revendication 23, dans laquelle le client de courriel maintient une liste de services de délivrance de permis postaux réutilisables acceptables et rejette les courriels qui comportent des permis postaux réutilisables attachés provenant de services de délivrance de permis postaux réutilisables qui ne figurent pas sur la liste.

25. Méthode selon la revendication 1, dans laquelle le permis postal réutilisable inclut une date de validité, après laquelle le permis ne peut plus être ni validé ni renouvelé.

26. Méthode selon la revendication 25, dans laquelle l'étape de vérification de la présence d'un permis postal réutilisable sur le courriel entrant inclut l'étape de comparaison de la date de validité du permis postal réutilisable avec une date actuelle, et de réponse à l'émetteur par une demande d'un autre permis si la date actuelle est postérieure à la date de validité.

27. Méthode selon la revendication 1, dans laquelle le permis postal réutilisable inclut une représentation d'une valeur variable.

28. Méthode selon la revendication 27, dans laquelle l'étape de vérification de la présence d'un permis postal réutilisable sur le courriel entrant inclut l'étape de comparaison de la valeur variable du permis postal réutilisable à une valeur minimale configurable par l'utilisateur, et de réponse à l'émetteur par une demande d'une valeur supplémentaire lorsque le minimum n'est pas atteint.

29. Méthode selon la revendication 27, dans laquelle la valeur variable est une valeur en espèces.

30. Méthode selon la revendication 29, comprenant en outre l'étape de remboursement du permis postal réutilisable pour une partie, ou pour l'ensemble, de sa valeur en espèces, de produits ou de services, pour une valeur équivalente par le service de délivrance de permis postaux réutilisables.

31. Méthode selon la revendication 30, dans laquelle le permis postal réutilisable inclut des informations d'identification de l'un des nombreux services de délivrance de permis postaux réutilisables auprès duquel le permis postal réutilisable présent peut être validé et renouvelé, et dans laquelle l'étape de remboursement du permis postal réutilisable comprend en outre les étapes de délivrance d'un, ou plus, permis postal réutilisable à un service de compensation de permis postaux réutilisables, de remboursement des permis postaux réutilisables par un proxy par leurs services de délivrance de permis postaux réutilisables respectifs, et d'agrégation de la valeur ainsi obtenue pour un avoir en espèces, biens ou services pour l'utilisateur.

32. Système de régulation de la transmission d'un courriel par un émetteur à un destinataire et réception du courriel par le destinataire, le système comprenant :
a) des premiers moyens d'envoi, disposés pour accepter un courriel sortant provenant de l' émetteur ;
b) des seconds moyens d'envoi, disposés pour envoyer le courriel sortant vers une destination distante ;
c) des premiers moyens de réception, disposés pour accepter un courriel entrant provenant d'une source à distance ;
d) des seconds moyens de réception, disposés pour délivrer le courriel entrant au destinataire ;
e) des moyens de stockage de permis, disposés pour stocker un, ou plus, permis postal réutilisable ;
f) des moyens d'attachement, disposés pour attacher un, ou plus, permis postal réutilisable, extrait à partir des moyens de stockage de permis, au courriel sortant accepté par les premiers moyens d'envoi, avant l'envoi sur les seconds moyens d'envoi ; et
g) des moyens d'extraction, disposés pour extraire et vérifier un, ou plus, permis postal réutilisable provenant d'un courriel entrant accepté par les premiers moyens de réception, avant la distribution sur les seconds moyens de réception et stockage du permis postal réutilisable extrait dans les moyens de stockage de permis
dans lequel les moyens d'extraction comprennent en outre :
h) des moyens d'interface, disposés pour s'interfacer à un, ou plus, service de délivrance de permis postaux réutilisables ;
i) des moyens de vérification, disposés pour vérifier la validité du permis postal réutilisable avec un service de délivrance de permis postaux réutilisables ; et
j) des moyens d'encaissement, disposés pour encaisser un permis postal réutilisable renouvelé provenant du service de délivrance de permis postaux réutilisables, pour le stockage dans les moyens de stockage de permis
et dans lequel le système comprend en outre des moyens de rejet, disposés pour rejeter les courriels entrants lorsqu'aucun permis postal réutilisable acceptable n'est attaché et dans lequel le système est disposé de manière à ce que le permis postal réutilisable soit renouvelé lorsqu'il est vérifié par le service de délivrance de permis postaux réutilisables.

33. Système selon la revendication 32, comprenant en outre des moyens de génération d'un code d'encaissement, disposés pour générer un code d'encaissement unique, afin de corréler les actions des moyens de vérification et des moyens d'encaissement.

34. Système selon la revendication 32, comprenant en outre des moyens de retard, disposés pour retarder les opérations des moyens d'encaissement, en résultat des informations retournées aux moyens de vérification.

35. Système selon la revendication 32, comprenant en outre des moyens de redirection, disposés pour rediriger la demande de vérification vers une nouvelle adresse du même, ou d'un autre, service de délivrance de permis postaux réutilisables.

36. Système selon la revendication 32, comprenant en outre des moyens de retour, disposés pour retourner automatiquement un courriel avec un permis postal réutilisable attaché en réponse à un courriel entrant provenant de certains émetteurs prédéfinis.

37. Système selon la revendication 32, dans lequel lesdits moyens d'extraction comprennent en outre des moyens de vérification, disposés pour vérifier le caractère acceptable à première vue du permis postal réutilisable.

38. Système selon la revendication 32, dans lequel les moyens de vérification vérifient un, ou plus, des éléments suivants :
a) un CRC ou d'autres informations redondantes ;
b) une valeur ;
c) une date de validité ;
d) un identifiant du distributeur ;
e) un champ de type et/ou de version ; ou
f) des valeurs drapeau
du permis postal réutilisable.

39. Système selon la revendication 32, dans lequel les moyens de rejet comprennent en outre :
a) des moyens de demande d'accès, disposés pour générer et retourner un courriel de demande d'accès à un émetteur du courriel entrant ; et
b) des moyens de vérification de la réponse, disposés pour vérifier la validité d'une réponse au courriel de demande d'accès.

40. Système selon la revendication 39, dans lequel les moyens de rejet comprennent en outre :
a) des moyens de stockage de courriels, disposés pour stocker le courriel entrant pendant le processus de demande d'accès ; et
b) des moyens de récupération, disposés pour récupérer le courriel entrant à partir des moyens de stockage de courriel lorsqu'il a été répondu à la demande d'accès de manière satisfaisante.

41. Système selon la revendication 40, comprenant en outre des moyens de temporisation, disposés pour supprimer les courriels entrants à partir des moyens de stockage de courriel après l'écoulement d'une durée prédéfinie depuis le début de leur stockage.

42. Système selon la revendication 39, dans lequel le courriel de demande d'accès inclut des instructions sur la manière d'installer un logiciel permettant l'attachement de permis postaux réutilisables.

43. Système selon la revendication 39, dans lequel le courriel de demande d'accès requiert une raison d'accepter le courriel entrant, et les moyens de vérification de la réponse comprennent en outre des moyens de vérification, disposés pour présenter la raison au destinataire ainsi que l'obtention d'une autorisation de traitement par le destinataire.

44. Système selon la revendication 39, dans lequel les moyens de demande d'accès comprennent en outre des moyens de demande d'avis, disposés pour demande un avis à un service de gestion de réponses avant le retour du courriel de demande d'accès.

45. Système selon la revendication 44, dans lequel les moyens de demande d'avis comprennent des moyens de génération de signatures, disposés pour générer une, ou plus, signature codée du courriel entrant pour une soumission au service de gestion de réponses.

46. Système selon la revendication 44, dans lequel les moyens de demande d'avis comprennent en outre des moyens, disposés pour réaliser une action sur le courriel entrant, l'action incluant l'une, ou plus, des actions suivantes :
a) suppression du courriel entrant ;
b) remise du courriel entrant au destinataire ;
c) demande d'accès du courriel entrant ;
d) envoi d'informations supplémentaires sur le courriel au service de gestion de réponses ; ou
e) retard pendant une durée avant une nouvelle soumission du courriel entrant au service de gestion de réponses.

47. Système selon la revendication 32, comprenant en outre des moyens d'achat, disposés pour acheter de nouveaux permis postaux réutilisables auprès d'un service de délivrance de permis postaux réutilisables.

48. Système selon la revendication 32, dans lequel le permis postal réutilisable inclut un champ indiquant une valeur et comprenant en outre des moyens de remboursement, disposés pour rembourser des permis postaux réutilisables d'une valeur en espèces, de produits ou de services équivalents par le service de délivrance de permis postaux réutilisables.

49. Système selon la revendication 48, dans lequel le permis postal réutilisable inclut un champ indiquant l'un, parmi une pluralité, des services de délivrance de permis postaux réutilisables qui ont délivré à l'origine le permis postal réutilisable.

50. Système selon la revendication 49, comprenant en outre des moyens de compensation pour transférer les paiements de remboursement entre l'émetteur original d'un permis postal réutilisable et un compte détenu au niveau d'un autre service de permis postaux réutilisables par le destinataire.

51. Système selon la revendication 49, comprenant en outre des moyens d'acceptation centrale pour accepter les permis postaux réutilisables délivrés par une pluralité de services de délivrance de permis postaux réutilisables, des moyens de proxy pour rembourser des permis postaux réutilisables sous la responsabilité d'un utilisateur, et des moyens d'agrégation pour payer une somme agrégée à l'utilisateur ou de délivrer des bien ou des services pour une valeur équivalente.

52. Système de régulation de la réception d'un courriel par un destinataire, le système comprenant :
a) des premiers moyens de réception, disposés pour accepter un courriel entrant provenant d'une source à distance ;
b) des seconds moyens de réception, disposés pour remettre le courriel entrant vers le destinataire ;
c) des moyens de stockage de permis, disposés pour stocker un, ou plus, permis postal réutilisable ; et
d) des moyens d'extraction, disposés pour extraire et vérifier un, ou plus, permis postal réutilisable provenant d'un courriel entrant accepté au niveau des premiers moyens de réception avant la remise sur les seconds moyens de réception et stockage du permis postal réutilisable extrait dans les moyens de stockage de permis
dans lequel les moyens d'extraction comprennent en outre :
e) des moyens d'interface, disposés pour s'interfacer à un, ou plus, service de délivrance de permis postaux réutilisables ;
f) des moyens de vérification, disposés pour vérifier la validité du permis postal réutilisable avec un service de délivrance de permis postaux réutilisables ; et
g) des moyens d'encaissement, disposés pour encaisser un permis postal réutilisable renouvelé provenant du service de délivrance de permis postaux réutilisables, pour le stockage dans les moyens de stockage de permis
et dans lequel le système comprend en outre des moyens de rejet, disposés pour rejeter les courriels entrants lorsqu'aucun permis postal réutilisable acceptable n'est attaché et dans lequel le système est disposé de manière à ce que le permis postal réutilisable soit renouvelé lorsqu'il est vérifié par le service de délivrance de permis postaux réutilisables.

53. Système selon la revendication 52, comprenant en outre des moyens de génération d'un code d'encaissement, disposés pour générer un code d'encaissement unique, afin de corréler les actions des moyens de vérification et des moyens d'encaissement.

54. Système selon la revendication 52, comprenant en outre des moyens de retard, disposés pour retarder les opérations des moyens d'encaissement en résultat des informations retournées aux moyens de vérification.

55. Système selon la revendication 52, comprenant en outre des moyens de retour, disposés pour retourner automatiquement un courriel avec un permis postal réutilisable attaché en réponse à un courriel entrant provenant de certains émetteurs prédéfinis.

56. Système selon la revendication 32, dans lequel lesdits moyens d'extraction comprennent en outre des moyens de vérification, disposés pour vérifier le caractère acceptable à première vue du permis postal réutilisable.

57. Système selon la revendication 56, dans lequel les moyens de vérification vérifient un, ou plus, des éléments suivants :
a) un CRC ou d'autres informations redondantes ;
b) une valeur;
c) une date de validité ;
d) un identifiant du distributeur ;
e) un champ de type et/ou de version ; ou
f) des valeurs drapeau
du permis postal réutilisable.

58. Système selon la revendication 52, dans lequel les moyens de rejet comprennent en outre :
a) des moyens de demande d'accès, disposés pour générer et retourner un courriel de demande d'accès à un émetteur du courriel entrant ; et
b) des moyens de vérification de la réponse, disposés pour vérifier la validité d'une réponse au courriel de demande d'accès.

59. Système selon la revendication 52, dans lequel les moyens de rejet comprennent en outre :
a) des moyens de stockage de courriels, disposés pour stocker le courriel entrant pendant le processus de demande d'accès ; et
b) des moyens de récupération, disposés pour récupérer le courriel entrant à partir des moyens de stockage de courriels, lorsqu'il a été répondu à la demande d'accès de manière satisfaisante.

60. Système selon la revendication 59, comprenant en outre des moyens de temporisation, disposés pour supprimer les courriels entrants à partir des moyens de stockage de courriels après l'écoulement d'une durée prédéfinie depuis le début de leur stockage.

61. Système selon la revendication 58, dans lequel le courriel de demande d'accès inclut des instructions sur la manière d'installer un logiciel permettant l'attachement de permis postaux réutilisables.

62. Système selon la revendication 59, dans lequel le courriel de demande d'accès requiert une raison d'accepter le courriel entrant, et les moyens de vérification de la réponse comprennent en outre des moyens de vérification, disposés pour présenter la raison au destinataire ainsi que l'obtention d'une autorisation de traitement provenant du destinataire.

63. Système selon la revendication 59, dans lequel les moyens de demande d'accès comprennent en outre des moyens de demande d'avis, disposés pour demande un avis à un service de gestion de réponses, avant de retourner le courriel de demande d'accès.

64. Système selon la revendication 63, dans lequel les moyens de demande d'avis comprennent des moyens de génération de signatures, disposés pour générer une, ou plus, signature codée du courriel entrant, pour une soumission au service de gestion de réponses.

65. Système selon la revendication 63, dans lequel les moyens de demande d'avis comprennent en outre des moyens, disposés pour réaliser une action sur le courriel entrant, l'action incluant l'une, ou plus, des actions suivantes :
a) suppression du courriel entrant ;
b) remise du courriel entrant au destinataire ;
c) demande d'accès du courriel entrant ;
d) envoi d'informations supplémentaires sur le courriel au service de gestion de réponses ; ou
e) retard pendant une durée avant une nouvelle soumission du courriel entrant au service de gestion de réponses.

66. Système selon la revendication 52, comprenant en outre des moyens d'achat, disposés pour acheter de nouveaux permis postaux réutilisables à un service de délivrance de permis postaux réutilisables.

67. Système selon la revendication 52, dans lequel le permis postal réutilisable inclut un champ indiquant une valeur et comprenant en outre des moyens de remboursement, disposés pour rembourser des permis postaux réutilisables d'une valeur en espèces, de produits ou de services équivalents par le service de délivrance de permis postaux réutilisables.

68. Système selon la revendication 32, comprenant des moyens de détermination, disposés pour déterminer si le destinataire est capable d'utiliser un permis postal réutilisable, les moyens d'attachement n'étant uniquement, disposés que pour attacher ledit permis postal réutilisable au courriel sortant, lorsque le destinataire est capable d'utiliser un permis postal réutilisable.

69. Système selon la revendication 68, dans lequel lesdits moyens de détermination sont également, disposés pour déterminer la valeur du permis postal réutilisable qui nécessite d'être attaché pour la réception du courriel par le destinataire.

70. Système selon la revendication 69, disposé pour notifier l'émetteur du courriel lorsqu'aucun permis postal réutilisable d'une valeur suffisante n'est disponible pour un attachement au courriel.

71. Système selon la revendication 32, disposé pour notifier l'émetteur du courriel lorsqu'aucun permis postal réutilisable n'est disponible pour un attachement au courriel.

72. Système selon la revendication 68, disposé pour stocker ledit courriel lorsqu'il n'est pas déterminé que le destinataire est capable d'utiliser un permis postal réutilisable, les seconds moyens d'envoi étant ensuite, disposés pour attacher des données qui identifient l'émetteur comme étant capable de d'attacher des permis postaux réutilisables.

73. Système selon la revendication 72, comprenant des moyens de réception, disposés pour recevoir une réponse au courriel de demande d'accès par le destinataire et d'agir sur le courriel stocké selon la réponse au courriel de demande d'accès.

74. Système selon la revendication 73, dans lequel lesdits moyens de réception sont, disposés pour agir par suppression du courriel stocké.

75. Système selon la revendication 73, dans lequel les moyens de réception sont, disposés pour agir en interprétant la réponse au courriel de demande d'accès pour découvrir la valeur du permis postal réutilisable exigée par le destinataire, et en envoyant de nouveau le courriel stocké au destinataire en attachant des permis postaux réutilisables suffisants pour satisfaire ladite exigence.

76. Système selon la revendication 75, dans lequel les moyens de réception sont, disposés pour agir en prenant note de la capacité du permis postal réutilisable du destinataire et la valeur du permis postal réutilisable exigée par le destinataire dans les moyens de détermination, pour une utilisation dans de futurs courriels au destinataire.

77. Système de régulation des communications par courriels entre un émetteur et un destinataire, le système comprenant des moyens au niveau d'un émetteur pour l'application d'un permis postal réutilisable à un courriel sortant vers un destinataire, le destinataire étant disposé pour bloquer les courriels reçus qui ne comprennent pas de permis postal réutilisable et pour extraire lesdits permis postaux réutilisables à partir des courriels reçus qui comprennent un permis postal réutilisable, ledit permis postal réutilisable extrait étant renouvelé lorsqu'il est vérifié par une autorité de délivrance de permis postaux réutilisables et stocké pour une application ultérieure aux courriels sortants envoyés par le destinataire à d'autres destinataires.

78. Système selon la revendication 77, dans lequel le destinataire est disposé pour vérifier la valeur des permis postaux réutilisables et pour bloquer les courriels reçus qui ne comprennent pas de permis postal réutilisable d'une valeur suffisante.

79. Système selon la revendication 77, dans lequel le destinataire est disposé pour répondre à l'émetteur par un courriel supplémentaire comprenant un permis postal réutilisable, pour une application ultérieure aux courriels sortants envoyés par l'émetteur au destinataire ou à d'autres destinataires.

80. Système selon la revendication 77, dans lequel l'émetteur est capable d'acheter des permis postaux réutilisables supplémentaires à un service de délivrance de permis postaux réutilisables.

81. Système selon la revendication 77, comprenant des moyens de validation à distance, disposés pour valider de manière distante des permis reçus par des destinataires, chaque destinataire comprenant des moyens de blocage, disposés pour bloquer des courriels comprenant des permis postaux réutilisables qui n'ont pas été validés par lesdits moyens de validation à distance.

82. Programme logiciel pour la régulation de la transmission d'un courriel provenant d'un émetteur vers un destinataire et de la réception d'un courriel par le destinataire, le programme étant disposé pour attacher un permis postal réutilisable à un courriel sortant provenant de l'émetteur vers le destinataire, le logiciel étant en outre disposé pour bloquer les courriels reçus de la part d'autres émetteurs qui ne comprennent pas de permis postal réutilisable, le destinataire étant capable d'extraire des permis postaux réutilisables des courriels reçus et de stocker des permis postaux réutilisables pour un attachement ultérieur aux courriels sortants envoyés par le destinataire à d'autres destinataires.
